# FASCICULE DE BREVET EUROPEEN

(11) **EP 3 210 954 B1**
(45) Date de publication et mention de la délivrance du brevet: **31.07.2019**
(21) Numéro de dépôt: 17161633.7
(22) Date de dépôt: 20.12.2012
(51) Int. Cl.: C04B 35/488, C04B 35/44, C04B 35/16, C04B 35/195, C04B 35/597, C04B 35/634, C04B 35/18, C04B 33/04, H04B 1/3888, H04M 1/18

(54) **PROCÉDÉ DE FABRICATION D'UNE PIÈCE FRITTÉE**
VERFAHREN ZUR HERSTELLUNG EINES GESINTERTEN GEGENSTANDS
PROCESS FOR PRODUCING A SINTERED ARTICLE

(30) Priorité: 23.12.2011 FR 1162382
(43) Date de publication de la demande: 30.08.2017
(62) Demande divisionnaire de: 12823023.2
(73) Titulaire: Saint-Gobain Centre de Recherches et d'Etudes Europeen, 92400 Courbevoie (FR)
(72) Inventeur: NAHAS, Nabil, 77700 SERRIS (FR); URFFER, Daniel, 84450 SAINT SATURNIN LES AVIGNON (FR)
(74) Mandataire: Nony

(56) Documents cités:
- EP-A1- 2 383 240
- FR-A1- 2 579 199
- FR-A1- 2 910 467
- MORITA K ET AL: "Synthesis of dense nanocrystalline ZrO2-MgAl2O4 spinel composite", SCRIPTA MATERIALIA, ELSEVIER, AMSTERDAM, NL, vol. 53, no. 9, novembre 2005 (2005-11), pages 1007-1012, XP025398473, ISSN: 1359-6462, DOI: 10.1016/J.SCRIPTAMAT.2005.07.008 [extrait le 2005-11-01]

## Description

### Domaine technique

Il est décrit un dispositif de communication par ondes hertziennes de fréquences comprises entre 800MHz à 3GHz et comportant un capot céramique traversé par au moins une partie desdites ondes lors de l'utilisation du dispositif. L'invention concerne un procédé de fabrication d'une pièce frittée.

### Arrière-plan technologique

US 2006/0268528 décrit des exemples d'un tel dispositif, le capot pouvant notamment être constitué de zircone. La zircone est cependant peu transparente aux ondes hertziennes de fréquences comprises entre 800MHz à 3GHz, ce qui peut poser des problèmes de communication, par exemple si la région dans laquelle le dispositif est utilisé est mal couverte par le réseau de télécommunication ou présente des obstacles aux ondes.

Par ailleurs, les matériaux connus pour leur transparence élevée aux ondes hertziennes de fréquences comprises entre 800MHz à 3GHz peuvent présenter une résistance aux chocs et aux rayures limitée, ce qui les rend inadaptés si le capot est exposé à l'environnement extérieur, par exemple si le capot est une coque d'un téléphone ou d'un ordinateur portable. Dans ces applications, le dispositif doit en effet conserver son intégrité et son apparence en cas de choc ou de frottements.

Il existe donc un besoin pour un dispositif de communication par ondes hertziennes de fréquences comprises entre 800MHz à 3GHz et comportant un capot présentant à la fois une haute transparence aux dites ondes et une résistance élevée aux chocs et aux rayures.

Un but est de satisfaire, au moins partiellement, ce besoin.

FR 2 910 467 A1 décrit un produit fritté élaboré à partir d'une charge de départ contenant 5 à 50% de zircon, et présentant la composition chimique moyenne suivante, en pourcentages massiques sur la base des oxydes et pour un total de 100% : de la silice et de la zircone, la teneur en zircone (ZrO2) étant au moins égale à 64%, au moins 0,2% d'un dopant choisi parmi V₂O₅, Nb₂O₅, Ta₂O₅, et leurs mélanges, optionnellement un stabilisant choisi parmi Y₂O₃, MgO, CaO, CeO₂, et leurs mélanges, à une teneur inférieure ou égale à 6%, des « autres oxydes » à une teneur inférieure ou égale à 6,7 %.

FR 2 579 199 A1 décrit une céramique à base de zircone essentiellement formée d'au moins 40 % en poids de zircone partiellement stabilisée du système ZrO₂-Y₂O₃-CeO₂, dont la proportion des composants se situe dans la plage définie par la ligne joignant les points A, B, C, D et E d'un diagramme ternaire dont les sommets sont donnes par ZrO₂, Y₂O₃ et CeO₂ en moles : A (87,5, 12, 0,5), B (95,5, 4, 0,5), C (95,5, 2, 2,5), D (92,5, 0,5, 7,0), et E (85, 0,5, 14,5) et 3 à 60% en poids de Al₂O₃, et a un diamètre moyen des cristaux ne dépassant pas 2 µm et une résistance à la flexion d'au moins 981 MPa, la structure des cristaux de ZrO₂ étant tétragonale à 50 % en volume au moins et monoclinique à 30 % en volume au plus, après 10 heures dans la vapeur d'eau à 180°C et sous pression de 1 MPa.

### Résumé de l'invention

On atteint ce but au moyen d'un dispositif de communication par ondes hertziennes de fréquences comprises entre 800MHz à 3GHz comportant un capot céramique exposé, au moins en partie, à l'environnement extérieur du dispositif et traversé par au moins une partie desdites ondes lors de l'utilisation du dispositif, ce capot étant au moins en partie constitué en un produit fritté présentant une composition chimique telle que, en pourcentage massique et pour un total de 100% :
- 32 % ≤ ZrO₂ ≤ 95%,
- 1 % < Y₂O₃+CeO₂+Sc₂O₃+MgO+CaO,
- 0% ≤ CeO₂ ≤ 26%,
- 0% ≤ MgO ≤ 43%,
- 0% ≤ CaO ≤ 37%,
- 0% ≤ SiO₂ ≤ 41%,
- 0% ≤ Al₂O₃ ≤ 55%,
- 0% ≤ TiO₂ ≤ 30%,
- 0% ≤ oxydes de lanthanides excepté CeO₂ ≤ 50%,
- 0% ≤ SrO ≤ 24%,
- 0% ≤ composés SiAlON ≤ 50%,
- autres composés ≤ 15%, et
ledit produit fritté comportant, en pourcentage massique sur la base du produit fritté et pour un total de 100% :
- plus de 50% d'une partie cristallisée, ladite partie cristallisée comportant, en pourcentage massique sur la base de la partie cristallisée et pour un total de 100% :
   - plus de 40% d'une première phase cristallisée constituée de zircone, plus de 50% en masse de ladite zircone étant stabilisée au moyen d'un stabilisant sous une forme quadratique et/ou cubique, le complément étant sous une forme monoclinique,
   - optionnellement, moins de 50% d'une deuxième phase cristallisée constituée par un composé choisi parmi MgAl₂O₄, XAlₘOₙ, avec X choisi parmi Mg, Ca, Sr, Y, les oxydes de lanthanides et leurs mélanges, m étant un nombre entier tel que 10 ≤ m ≤ 12, n étant un nombre entier tel que 16 ≤ n ≤ 20, Mg₃Al₂(SiO₄)₃, ZrSiO₄, les silicates d'yttrium, l'yttrium pouvant être partiellement substitué, X₂ZSi₂O₇ avec X choisi parmi Y, les oxydes de lanthanides et leurs mélanges et Z choisi parmi Mg, Al et leurs mélanges, Mg₂Al₃(Si₅AlO₁₈), (Ca,Sr)Al₂Si₂O₃, 3(Al₂O₃)2(SiO₂), les phases SiAlON, et leurs mélanges, et
   - optionnellement, moins de 10% d'une troisième phase cristallisée constituée par un composé choisi parmi les oxydes de structure pérovskite, les oxydes de structure spinelle, les oxydes de structure rutile FO₂, l'élément F étant choisi dans le groupe G_{F}(1) formé par les mélanges d'étain et de vanadium, les mélanges de titane et de chrome et de niobium, les mélanges de titane et de chrome et de tungstène, les mélanges de titane et de niobium et de manganèse, les mélanges d'étain et de chrome, et leurs mélanges, les oxydes de structure hématite E₂O₃, l'élément E étant choisi dans le groupe G_{E}(1) formé par les mélanges d'aluminium et de chrome, les mélanges d'aluminium et de manganèse, et leurs mélanges, les orthosilicates choisis dans le groupe des orthosilicates de zirconium et de praséodyme (Zr,Pr)SiO₄, des orthosilicates de zirconium et de vanadium (Zr,V)SiO₄, des orthosilicates de zirconium dans lesquels se trouve de l'oxyde de fer en inclusion, et leurs mélanges,
   - moins de 5%, de préférence moins de 3 %, de préférence moins de 1% d'autres phases cristallisées,
- optionnellement une partie amorphe comportant, en pourcentage massique sur la base de la partie amorphe et pour un total de 100% :
   - une première phase amorphe vitreuse de composition XₓAlₐSi_{b}O_{c} avec X choisi parmi Mg, Ca, Sr, Sc, Y, les oxydes de lanthanides, Ti, Zr, Fe, Mn, Co, Cr et leurs mélanges, x, a, b, c étant des nombres entiers tels que x+a > 0, c > 0, b > 0, a/b ≤ 2, x/b ≤ 1,
   - moins de 10%, voire moins de 5%, voire moins de 3 %, voire moins de 1% d'autres phases amorphes,
   la somme des teneurs massiques en deuxième phase cristallisée et en première phase amorphe étant supérieure à 10%, de préférence supérieure à 15% et inférieure à 50%, de préférence inférieure à 40%, de préférence inférieure à 30%, de préférence inférieure à 25%.

De préférence, un dispositif tel que décrit comporte encore une, et de préférence plusieurs, des caractéristiques optionnelles suivantes :
- De préférence, la densité du produit fritté tel que décrit est supérieure à 90%, voire supérieure à 95%, voire supérieure à 98%, de préférence supérieure à 99%, de préférence supérieure à 99,5% de la densité théorique. Les inventeurs ont en effet découvert qu'une densité élevée conduit avantageusement à un bon développement de la couleur dans la pièce frittée et à de bonnes propriétés mécaniques.
- De préférence, la taille moyenne des grains de zircone est inférieure à 10 µm, de préférence inférieure à 5 µm, de préférence inférieure à 1 µm, de préférence inférieure à 0,7 µm, voire inférieure à 0,5 µm, voire encore inférieure à 0,3 µm. Les performances mécaniques en sont avantageusement améliorées.
- De préférence, la taille moyenne des grains de la deuxième phase cristallisée est inférieure à 50 µm, de préférence inférieure à 10 µm, de préférence inférieure à 5 µm, voire inférieure à 1 µm, voire encore inférieure à 0,5 µm.
- De préférence, la taille moyenne des grains de la troisième phase cristallisée est inférieure à 1 µm, de préférence inférieure à 0,7 µm, voire inférieure à 0,5 µm, voire encore inférieure à 0,3 µm.
- Dans un mode de réalisation, les oxydes représentent plus de 98 %, plus de 99 %, voire sensiblement 100 % de la masse du produit fritté tel que décrit.
- La teneur en zircone du produit fritté tel que décrit est de préférence supérieure à 40%, de préférence supérieure à 48%, de préférence supérieure à 52%, de préférence supérieure à 60%, de préférence supérieure à 65% et/ou inférieure à 93%, de préférence inférieure à 83%.
- Dans un mode de réalisation, la teneur en Y₂O₃+CeO₂+Sc₂O₃+MgO+CaO est inférieure à 18% et la teneur en CaO+MgO est inférieure à 5%.
- Dans un mode de réalisation, la teneur en Y₂O₃+Sc₂O₃ est inférieure à 7,5%, de préférence inférieure à 7% et la teneur en CeO₂+MgO+CaO est inférieure à 2%, de préférence inférieure à 1%, de préférence inférieure à 0,5%.
- Dans un mode de réalisation, la teneur en 3.Y₂O₃+CeO₂ est supérieure à 4%, de préférence supérieure à 5%, de préférence supérieure à 6% et inférieure à 18%, et la teneur en Sc₂O₃+MgO+CaO est inférieure à 2%, de préférence inférieure à 1%, de préférence inférieure à 0,5%.
- Dans un mode de réalisation, la teneur en Y₂O₃ est supérieure à 1%, de préférence supérieure à 2% et inférieure à 8%, de préférence inférieure à 7%, et la teneur en CeO₂+Sc₂O₃+MgO+CaO est inférieure à 2%, de préférence inférieure à 1%, de préférence inférieure à 0,5%.
- Dans un mode de réalisation, la teneur en CeO₂ est supérieure à 4%, de préférence supérieure à 5%, de préférence supérieure à 6% et inférieure à 14%, de préférence inférieure à 13%, et la teneur en Y₂O₃+Sc₂O₃+MgO+CaO est inférieure à 2%, de préférence inférieure à 1%, de préférence inférieure à 0,5%.
- Dans un mode de réalisation, la teneur en MgO est supérieure à 0,7% et inférieure à 34%, voire inférieure à 26%, voire inférieure à 17%.
- Dans un mode de réalisation, la teneur en Al₂O₃ est supérieure à 2,5% et inférieure à 46%.
- Dans un mode de réalisation, la teneur en La₂O₃ est supérieure à 3,5% et inférieure à 28%, voire inférieure à 20%.
- Dans un mode de réalisation, la teneur en SiO₂ est supérieure à 2,5% et inférieure à 34%.
- Dans un mode de réalisation, la teneur en CaO est supérieure à 2% et inférieure à 20%, voire inférieure à 13%.
- Dans un mode de réalisation, la teneur en SrO est supérieure à 3% et inférieure à 16%.
- Dans un mode de réalisation, la teneur en Y₂O₃ est supérieure à 6,5% et inférieure à 37%, voire inférieure à 33%.
- Dans un mode de réalisation, la teneur en Sc₂O₃ est supérieure à 5% et inférieure à 31%, voire inférieure à 27%.
- Dans un mode de réalisation, la teneur en phases SiAlON est inférieure à 40%, voire inférieure 30%, voire inférieure à 20%, voire inférieure à 10%, voire sensiblement nulle.
- De préférence, les phases SiAlON sont choisies parmi Si₃N₄, AlN, AlON, Si₂ON₂ et leurs mélanges.
- Dans un mode de réalisation, en particulier lorsque le produit fritté est fabriqué suivant un procédé selon l'invention (c'est-à-dire un procédé comportant les étapes a) à c) et optionnellement une ou plusieurs des étapes d) à f) décrites ci-après) dans lequel le mélange particulaire comporte une deuxième fraction particulaire de MgAl₁₂O₁₉, le produit fritté tel que décrit présente, en pourcentage massique sur la base de la masse du produit et pour un total de 100% :
   - une teneur en MgO supérieure à 0,7%, de préférence supérieure à 1% et de préférence inférieure à 13%, de préférence inférieure à 4%, de préférence inférieure à 3%, de préférence inférieure à 2%, et
   - une teneur en Al₂O₃ supérieure à 9%, de préférence supérieure à 14% et de préférence inférieure à 55%, de préférence inférieure à 46,5%, de préférence inférieure à 37,5%, de préférence inférieure à 28%, de préférence inférieure à 23,5%, et
   - une teneur en zircone de préférence supérieure à 40%, de préférence supérieure à 48%, de préférence supérieure à 52%, de préférence supérieure à 60%, de préférence supérieure à 65% et/ou inférieure à 93%, de préférence inférieure à 83%, et
   - une somme Y₂O₃+CeO₂+Sc₂O₃+MgO+CaO inférieure à 31%, de préférence inférieure à 22%, de préférence inférieure à 18% et une teneur en CaO+MgO inférieure à 18%, de préférence inférieure à 9%, de préférence à 5% et
   - une teneur en Sc₂O₃ de préférence inférieure à 3%, de préférence inférieure à 1%, et
   - une teneur en autres composés, c'est-à-dire des composés autres que ceux cités ci-dessus (MgO, Al₂O₃, ZrO₂, Y₂O3, CeO₂, Sc₂O₃, CaO), de préférence des oxydes, inférieure 10%, voire inférieure à 8%, voire inférieure à 5%, voire inférieure à 3%, voire inférieure à 2%, voire inférieure à 1%, voire inférieure à 0,5%,
   la teneur en MgAl₁₂O₁₉ étant de préférence supérieure à 10%, de préférence supérieure à 15% et inférieure à 50%, de préférence inférieure à 40%, de préférence inférieure à 30%, de préférence inférieure à 25%, en pourcentage massique sur la base de la partie cristallisée, et
   la teneur en première phase cristallisée, le stabilisant étant de préférence choisi parmi Y₂O3, CeO₂ et leurs mélanges, étant de préférence supérieure à 40%, de préférence supérieure à 50%, de préférence supérieure à 60%, de préférence supérieure à 75% et de préférence inférieure à 90%, voire inférieure à 85%, en pourcentage massique sur la base de la partie cristallisée, et la partie cristallisée représentant de préférence plus de 60%, de préférence plus de 70%, de préférence plus de 80%, voire plus de 90%, voire plus de 95% du produit fritté, en pourcentage massique sur la base du produit fritté.
- Dans un mode de réalisation, en particulier lorsque le produit fritté est fabriqué suivant un procédé selon l'invention dans lequel le mélange particulaire comporte une deuxième fraction particulaire de LaAl₁₁O₁₈, le produit fritté tel que décrit présente, en pourcentage massique sur la base de la masse du produit et pour un total de 100%
   - une teneur en La₂O₃ supérieure à 2%, de préférence supérieure à 3% et de préférence inférieure à 20%, de préférence inférieure à 11,5%, de préférence inférieure à 9%, de préférence inférieure à 7%, de préférence inférieure à 6, et
   - une teneur en Al₂O₃ supérieure à 7%, de préférence supérieure à 11,5% et de préférence inférieure à 48%, de préférence inférieure à 39%, de préférence inférieure à 31%, de préférence inférieure à 23,5%, de préférence inférieure à 19,5%, et
   - une teneur en zircone de préférence supérieure à 40%, de préférence supérieure à 48%, de préférence supérieure à 52%, de préférence supérieure à 60%, de préférence supérieure à 65% et/ou inférieure à 93%, de préférence inférieure à 83%, et
   - une somme Y₂O₃+CeO₂+Sc₂O₃+MgO+CaO inférieure à 18% et une teneur en CaO+MgO inférieure à 5%, voire inférieure à 3%, voire inférieure à 1%, et une teneur en Sc₂O₃ de préférence inférieure à 3%, de préférence inférieure à 1%, et
   - une teneur en autres composés, c'est-à-dire des composés autres que ceux cités ci-dessus (La₂O₃, Al₂O₃, ZrO₂, Y₂O₃, CeO₂, Sc₂O₃, CaO, MgO), de préférence des oxydes, inférieure 10%, voire inférieure à 8%, voire inférieure à 5%, voire inférieure à 3%, voire inférieure à 2%, voire inférieure à 1%, voire inférieure à 0,5%,
   la teneur en LaAl₁₁O₁₈ étant de préférence supérieure à 10%, de préférence supérieure à 15% et inférieure à 50%, de préférence inférieure à 40%, de préférence inférieure à 30%, de préférence inférieure à 25%, en pourcentage massique sur la base de la partie cristallisée, et
   la teneur en première phase cristallisée (le stabilisant étant de préférence choisi parmi Y₂O₃, CeO₂ et leurs mélanges), étant de préférence supérieure à 40%, de préférence supérieure à 50%, de préférence supérieure à 60%, de préférence supérieure à 75% et de préférence inférieure à 90%, voire inférieure à 85%, en pourcentage massique sur la base de la partie cristallisée, et
   la partie cristallisée représentant de préférence plus de 60%, de préférence plus de 70%, de préférence plus de 80%, voire plus de 90%, voire plus de 95% du produit fritté, en pourcentage massique sur la base du produit fritté.
- Dans un mode de réalisation, en particulier lorsque le produit fritté est fabriqué suivant un procédé selon l'invention dans lequel le mélange particulaire comporte une deuxième fraction particulaire de Mg₃Al₂(SiO₄)₃, le produit fritté tel quel décrit présente
   - une teneur en MgO supérieure à 3%, de préférence supérieure à 4,5% et de préférence inférieure à 24%, de préférence inférieure à 15%, de préférence inférieure à 12%, de préférence inférieure à 9%, de préférence inférieure à 7,5%, et
   - une teneur en Al₂O₃ supérieure à 2,5%, de préférence supérieure à 3,5% et de préférence inférieure à 21%, de préférence inférieure à 12,5%, de préférence inférieure à 10%, de préférence inférieure à 7,5%, de préférence inférieure à 6,5%, et
   - une teneur en SiO₂ supérieure à 4,5%, de préférence supérieure à 6,5% et de préférence inférieure à 31%, de préférence inférieure à 22,5%, de préférence inférieure à 18%, de préférence inférieure à 13,5%, de préférence inférieure à 11,5%, et
   - une teneur en zircone de préférence supérieure à 40%, de préférence supérieure à 48%, de préférence supérieure à 52%, de préférence supérieure à 60%, de préférence supérieure à 65% et/ou inférieure à 93%, de préférence inférieure à 83%, et
   - une somme Y₂O₃+CeO₂+Sc₂O₃+MgO+CaO inférieure à 42%, de préférence inférieure à 33%, de préférence inférieure à 18% et une teneur en CaO+MgO inférieure à 29%, de préférence inférieure à 20%, et
   - une teneur en autres composés, c'est-à-dire des composés autres que ceux cités ci-dessus (MgO, Al₂O₃, ZrO₂, SiO₂, Y₂O₃, CeO₂, Sc₂O₃, CaO), de préférence des oxydes, inférieure 10%, voire inférieure à 8%, voire inférieure à 5%, voire inférieure à 3%, voire inférieure à 2%, voire inférieure à 1%, voire inférieure à 0,5%,
   la teneur en Mg₃Al₂(SiO₄)₃ étant de préférence supérieure à 3%, de préférence supérieure à 5% et inférieure à 44%, de préférence inférieure à 35%, de préférence inférieure à 26%, de préférence inférieure à 21%, en pourcentage massique sur la base de la partie cristallisée, et
   la teneur en première phase cristallisée étant de préférence supérieure à 40%, de préférence supérieure à 50%, de préférence supérieure à 56%, voire supérieure à 65%, voire supérieure à 74%, voire supérieure à 79% et de préférence inférieure à 97%, voire inférieure à 95%, en pourcentage massique sur la base de la partie cristallisée, et
   la partie cristallisée représentant de préférence plus de 62%, voire plus de 68%, voire plus de 75%, voire plus de 78% et de préférence moins de 93%, voire moins de 92%, voire moins de 90% du produit fritté, en pourcentage massique sur la base du produit fritté, et
   la partie amorphe comportant plus de 90% d'une phase amorphe vitreuse de composition XₓAlₐSi_{b}O_{c} avec X choisi parmi Mg et optionnellement Ca, Sr, Sc, Y, les oxydes de lanthanides, Ti, Zr, Fe, Mn, Co, Cr et leurs mélanges, x, a, b, c étant des nombres entiers tels que x > 0, a > 0, c > 0, b > 0, a/b ≤ 2, x/b ≤ 1, en pourcentage massique sur la base de la partie amorphe.
- Dans un mode de réalisation, le produit fritté tel que décrit présente
   - une teneur en SiO₂ supérieure à 3%, de préférence supérieure à 5% et de préférence inférieure à 26%, de préférence inférieure à 17%, de préférence inférieure à 14%, de préférence inférieure à 10,5%, de préférence inférieure à 8,5%, et
   - une teneur en zircone de préférence supérieure à 40%, de préférence supérieure à 48%, de préférence supérieure à 52%, de préférence supérieure à 60%, de préférence supérieure à 65% et/ou inférieure à 93%, de préférence inférieure à 83%, et
   - une somme Y₂O₃+CeO₂+Sc₂O₃+MgO+CaO inférieure à 18% et une teneur en CaO+MgO inférieure à 5%, voire inférieure à 3%, voire inférieure à 1%, et une teneur en Sc₂O₃ de préférence inférieure à 3%, de préférence inférieure à 1%, et
   - une teneur en autres composés, c'est-à-dire des composés autres que ceux cités ci-dessus (MgO, ZrO₂, SiO₂, Y₂O₃, CeO₂, Sc₂O₃, CaO), de préférence des oxydes, inférieure 10%, voire inférieure à 8%, voire inférieure à 5%, voire inférieure à 3%, voire inférieure à 2%, voire inférieure à 1%, voire inférieure à 0,5%,
   la teneur en première phase cristallisée (le stabilisant étant de préférence choisi parmi Y₂O₃, CeO₂ et leurs mélanges) étant de préférence supérieure à 40%, de préférence supérieure à 50%, voire supérieure à 60%, voire supérieure à 70%, voire supérieure à 75% et de préférence inférieure à 92%, voire inférieure à 88%, en pourcentage massique sur la base de la partie cristallisée, et
   la partie cristallisée représentant de préférence plus de 70%, voire plus de 80%, voire plus de 85% et de préférence moins de 95%, voire moins de 93% du produit fritté, en pourcentage massique sur la base du produit fritté, et
   la partie amorphe comportant plus de 90% d'une phase amorphe vitreuse de composition XₓAlₐSi_{b}O_{c} avec X choisi parmi Mg, Ca, Sr, Sc, Y, les oxydes de lanthanides, Ti, Zr, Fe, Mn, Co, Cr et leurs mélanges, x, a, b, c étant des nombres entiers tels que x+a > 0, c > 0, b > 0, a/b ≤ 2, x/b ≤ 1, en pourcentage massique sur la base de la partie amorphe.
- Dans un mode de réalisation, en particulier lorsque le produit fritté est fabriqué suivant un procédé selon l'invention dans lequel le mélange particulaire comporte une deuxième fraction particulaire de Ca₂Al₃(SiO₄)(Si₂O₇)OOH, le produit fritté tel que décrit présente
   - une teneur en Al₂O₃ supérieure à 3,5%, de préférence supérieure à 5% et de préférence inférieure à 26%, de préférence inférieure à 17,5%, de préférence inférieure à 14%, de préférence inférieure à 10,5%, de préférence inférieure à 9%, et
   - une teneur en SiO₂ supérieure à 4%, de préférence supérieure à 6% et de préférence inférieure à 29%, de préférence inférieure à 20%, de préférence inférieure à 16%, de préférence inférieure à 12%, de préférence inférieure à 10%, et
   - une teneur en CaO supérieure à 2,5%, de préférence supérieure à 3,5% et de préférence inférieure à 21%, de préférence inférieure à 12,5%, de préférence inférieure à 10%, de préférence inférieure à 7,5%, de préférence inférieure à 6,5%, et
   - une teneur en zircone de préférence supérieure à 40%, de préférence supérieure à 48%, de préférence supérieure à 52%, de préférence supérieure à 60%, de préférence supérieure à 65% et/ou inférieure à 93%, de préférence inférieure à 83%, et
   - une somme Y₂O₃+CeO₂+Sc₂O₃+MgO+CaO inférieure à 39%, de préférence inférieure à 30,5%, de préférence inférieure à 18% et une teneur en CaO+MgO inférieure à 26%, de préférence inférieure à 17,5%, de préférence inférieure à 7,5%, et
   - une teneur en autres composés, c'est-à-dire des composés autres que ceux cités ci-dessus (MgO, Al₂O₃, ZrO₂, SiO₂, Y₂O₃, CeO₂, Sc₂O₃, CaO), de préférence des oxydes, inférieure 10%, voire inférieure à 8%, voire inférieure à 5%, voire inférieure à 3%, voire inférieure à 2%, voire inférieure à 1%, voire inférieure à 0,5%, et
   la teneur en première phase cristallisée étant de préférence supérieure à 80%, voire supérieure à 90%, voire supérieure à 95%, en pourcentage massique sur la base de la partie cristallisée, et
   la partie cristallisée représentant de préférence plus de 57%, voire plus de 67%, voire plus de 71% et de préférence moins de 86%, voire moins de 81% du produit fritté, en pourcentage massique sur la base du produit fritté, et
   la partie amorphe comportant plus de 90% d'une phase amorphe vitreuse de composition XₓAlₐSi_{b}O_{c} avec X choisi parmi Ca et optionnellement Mg, Sr, Sc, Y, les oxydes de lanthanides, Ti, Zr, Fe, Mn, Co, Cr et leurs mélanges, x, a, b, c étant des nombres entiers tels que x > 0, a > 0, c > 0, b > 0, a/b ≤ 2, x/b ≤ 1, en pourcentage massique sur la base de la partie amorphe.
- Dans un mode de réalisation, en particulier lorsque le produit fritté est fabriqué suivant un procédé selon l'invention dans lequel le mélange particulaire comporte une deuxième fraction particulaire de Y₂Si₂O₇, le produit fritté tel que décrit présente
   - une teneur en SiO₂ supérieure à 3,5%, de préférence supérieure à 5% et de préférence inférieure à 26%, de préférence inférieure à 17,5%, de préférence inférieure à 14%, de préférence inférieure à 10,5%, de préférence inférieure à 9%, et
   - une teneur en Y₂O₃ supérieure à 6,5%, de préférence supérieure à 9,5% et de préférence inférieure à 38%, de préférence inférieure à 32,5%, de préférence inférieure à 26%, de préférence inférieure à 19,5%, de préférence inférieure à 16,5%, et
   - une teneur en zircone de préférence supérieure à 40%, de préférence supérieure à 48%, de préférence supérieure à 52%, de préférence supérieure à 60%, de préférence supérieure à 65% et/ou inférieure à 93%, de préférence inférieure à 83%, et
   - une somme Y₂O₃+CeO₂+Sc₂O₃+MgO+CaO inférieure à 56%, de préférence inférieure à 50,5%, de préférence inférieure à 18% et une teneur en CaO+MgO inférieure à 26%, de préférence inférieure à 17,5%, de préférence inférieure à 5%, voire inférieure à 3%, voire inférieure à 1%, et une teneur en Sc₂O₃ de préférence inférieure à 3%, de préférence inférieure à 1%, et
   - une teneur en autres composés, c'est-à-dire des composés autres que ceux cités ci-dessus (MgO, ZrO₂, SiO₂, Y₂O₃, CeO₂, Sc₂O₃, CaO), de préférence des oxydes, inférieure 10%, voire inférieure à 8%, voire inférieure à 5%, voire inférieure à 3%, voire inférieure à 2%, voire inférieure à 1%, voire inférieure à 0,5%, et
   la teneur en Y₂Si₂O₇ étant de préférence supérieure à 5%, voire supérieure à 8% et inférieure à 33%, voire inférieure à 25%, voire inférieure à 18%, voire inférieure à 14%, en pourcentage massique sur la base de la partie cristallisée, et
   la teneur en première phase cristallisée (le stabilisant étant de préférence choisi parmi Y₂O₃, CeO₂ et leurs mélanges) étant de préférence supérieure à 40%, de préférence supérieure à 50%, de préférence supérieure à 60%, de préférence supérieure à 67%, voire supérieure à 75%, voire supérieure à 82% et inférieure à 95%, voire inférieure à 92%, en pourcentage massique sur la base de la partie cristallisée, et
   la partie cristallisée représentant de préférence plus de 57%, voire plus de 67%, voire plus de 71% et de préférence moins de 90%, voire moins de 88%, voire moins de 83% du produit fritté, en pourcentage massique sur la base du produit fritté, et
   la partie amorphe comportant plus de 90% d'une phase amorphe vitreuse de composition XₓAlₐSi_{b}O_{c} avec X choisi parmi Y et optionnellement Mg, Ca, Sr, Sc, les oxydes de lanthanides, Ti, Zr, Fe, Mn, Co, Cr et leurs mélanges, x, a, b, c étant des nombres entiers tels que x > 0, x+a > 0, c > 0, b > 0, a/b ≤ 2, x/b ≤ 1, en pourcentage massique sur la base de la partie amorphe.
- Dans un mode de réalisation, en particulier lorsque le produit fritté est fabriqué suivant un procédé selon l'invention dans lequel le mélange particulaire comporte une deuxième fraction particulaire de Sc₂Si₂O₇, le produit fritté tel que décrit présente
   - une teneur en SiO₂ supérieure à 4,5%, de préférence supérieure à 7% et de préférence inférieure à 32%, de préférence inférieure à 23%, de préférence inférieure à 18,4%, de préférence inférieure à 14%, de préférence inférieure à 11,5%, et
   - une teneur en Sc₂O₃ supérieure à 5%, de préférence supérieure à 8% et de préférence inférieure à 36%, de préférence inférieure à 27%, de préférence inférieure à 22%, de préférence inférieure à 16%, de préférence inférieure à 13,5%, et
   - une teneur en zircone de préférence supérieure à 40%, de préférence supérieure à 48%, de préférence supérieure à 52%, de préférence supérieure à 60%, de préférence supérieure à 65% et/ou inférieure à 93%, de préférence inférieure à 83%, et
   - une somme Y₂O₃+CeO₂+Sc₂O₃+MgO+CaO inférieure à 54%, de préférence inférieure à 45%, de préférence inférieure à 18% et une teneur en CaO+MgO inférieure à 5%, et
   - une teneur en autres composés, c'est-à-dire des composés autres que ceux cités ci-dessus (MgO, ZrO₂, SiO₂, Y₂O₃, CeO₂, Sc₂O₃, CaO), de préférence des oxydes, inférieure 10%, voire inférieure à 8%, voire inférieure à 5%, voire inférieure à 3%, voire inférieure à 2%, voire inférieure à 1%, voire inférieure à 0,5%,
   la teneur en Sc₂Si₂O₇ étant de préférence supérieure à 5%, voire supérieure à 8% et inférieure à 33%, voire inférieure à 25%, voire inférieure à 18%, voire inférieure à 14%, en pourcentage massique sur la base de la partie cristallisée, et
   la teneur en première phase cristallisée étant de préférence supérieure à 40%, de préférence supérieure à 50%, de préférence supérieure à 60%, de préférence supérieure à 67%, voire supérieure à 75%, voire supérieure à 82% et inférieure à 95%, voire inférieure à 92%, en pourcentage massique sur la base de la partie cristallisée, et
   la partie cristallisée représentant de préférence plus de 57%, voire plus de 67%, voire plus de 71% et de préférence moins de 90%, voire moins de 88%, voire moins de 83% du produit fritté, en pourcentage massique sur la base du produit fritté, et
   la partie amorphe comportant plus de 90% d'une phase amorphe vitreuse de composition XₓAlₐSi_{b}O_{c} avec X choisi parmi Sc et optionnellement Mg, Ca, Sr, Sc, les oxydes de lanthanides, Ti, Zr, Fe, Mn, Co, Cr et leurs mélanges, x, a, b, c étant des nombres entiers tels que x > 0, x+a > 0, c > 0, b > 0, a/b ≤ 2, x/b ≤ 1, en pourcentage massique sur la base de la partie amorphe.
- Dans un mode de réalisation, en particulier lorsque le produit fritté est fabriqué suivant un procédé selon l'invention dans lequel le mélange particulaire comporte une deuxième fraction particulaire de Mg₂Al₃(Si₅AlO₁₈), le produit fritté tel que décrit présente
   - une teneur en MgO supérieure à 1,5%, de préférence supérieure à 2% et de préférence inférieure à 16,5%, de préférence inférieure à 7,5%, de préférence inférieure à 6%, de préférence inférieure à 4,5%, de préférence inférieure à 3,5%, et
   - une teneur en Al₂O₃ est supérieure à 2,5%, de préférence supérieure à 4% et de préférence inférieure à 23%, de préférence inférieure à 14,5%, de préférence inférieure à 11,5%, de préférence inférieure à 9%, de préférence inférieure à 7,5%, et
   - une teneur en SiO₂ supérieure à 5,5%, de préférence supérieure à 8% et de préférence inférieure à 37%, de préférence inférieure à 28%, de préférence inférieure à 22,5%, de préférence inférieure à 17%, de préférence inférieure à 14%, et
   - une teneur en zircone de préférence supérieure à 40%, de préférence supérieure à 48%, de préférence supérieure à 52%, de préférence supérieure à 60%, de préférence supérieure à 65% et/ou inférieure à 93%, de préférence inférieure à 83%, et
   - une somme Y₂O₃+CeO₂+Sc₂O₃+MgO+CaO inférieure à 34,5%, de préférence inférieure à 25,5%, de préférence inférieure à 18% et une teneur en CaO+MgO inférieure à 21,5%, de préférence inférieure 12,5%, de préférence inférieure à 5%, et
   - une teneur en autres composés, c'est-à-dire des composés autres que ceux cités ci-dessus (MgO, Al₂O₃, ZrO₂, SiO₂, Y₂O₃, CeO₂, Sc₂O₃, CaO), de préférence des oxydes, inférieure 10%, voire inférieure à 8%, voire inférieure à 5%, voire inférieure à 3%, voire inférieure à 2%, voire inférieure à 1%, voire inférieure à 0,5%,
   la teneur en Mg₂Al₃(Si₅AlO₁₈) étant de préférence supérieure à 5%, voire supérieure à 8% et inférieure à 33%, voire inférieure à 25%, voire inférieure à 18%, voire inférieure à 14%, en pourcentage massique sur la base de la partie cristallisée, et
   la teneur en première phase cristallisée étant de préférence supérieure à 40%, de préférence supérieure à 50%, de préférence supérieure à 60%, de préférence supérieure à 67%, voire supérieure à 75%, voire supérieure à 82% et inférieure à 95%, voire inférieure à 92%, en pourcentage massique sur la base de la partie cristallisée, et
   la partie cristallisée représentant de préférence plus de 57%, voire plus de 67%, voire plus de 71% et de préférence moins de 90%, voire moins de 88%, voire moins de 83% du produit fritté, en pourcentage massique sur la base du produit fritté, et
   la partie amorphe comportant plus de 90% d'une phase amorphe vitreuse de composition XₓAlₐSi_{b}O_{c} avec X choisi parmi Mg et optionnellement Ca, Sr, Sc, Y, les oxydes de lanthanides, Ti, Zr, Fe, Mn, Co, Cr et leurs mélanges, x, a, b, c étant des nombres entiers tels que x > 0, a > 0, c > 0, b > 0, a/b ≤ 2, x/b ≤ 1, en pourcentage massique sur la base de la partie amorphe.
- Dans un mode de réalisation, en particulier lorsque le produit fritté est fabriqué suivant un procédé selon l'invention dans lequel le mélange particulaire comporte une deuxième fraction particulaire de Mg₃Si₄O₁₀(OH)₂, le produit fritté tel que décrit présente
   - une teneur en MgO supérieure à 3%, de préférence supérieure à 4,5% et de préférence inférieure à 25%, préférence inférieure à 16,5%, de préférence inférieure à 13,5%, de préférence inférieure à 10%, de préférence inférieure à 8,5%, et
   - une teneur en SiO₂ supérieure à 6,5%, de préférence supérieure à 10% et de préférence inférieure à 42%, préférence inférieure à 33,5%, de préférence inférieure à 27%, de préférence inférieure à 20%, de préférence inférieure à 17%, et
   - une teneur en zircone de préférence supérieure à 40%, de préférence supérieure à 48%, de préférence supérieure à 52%, de préférence supérieure à 60%, de préférence supérieure à 65% et/ou inférieure à 93%, de préférence inférieure à 83%, et
   - une somme Y₂O₃+CeO₂+Sc₂O₃+MgO+CaO inférieure à 43%, de préférence inférieure à 34,5%, de préférence inférieure à 18% et une teneur en CaO+MgO inférieure à 30%, de préférence inférieure à 21,5%, de préférence inférieure à 9%, et
   - une teneur en autres composés, c'est-à-dire des composés autres que ceux cités ci-dessus (MgO, ZrO₂, SiO₂, Y₂O₃, CeO₂, Sc₂O₃, CaO), de préférence des oxydes, inférieure 10%, voire inférieure à 8%, voire inférieure à 5%, voire inférieure à 3%, voire inférieure à 2%, voire inférieure à 1%, voire inférieure à 0,5%,
   la teneur en première phase cristallisée étant de préférence supérieure à 80%, voire supérieure à 90%, voire supérieure à 95%, en pourcentage massique sur la base de la partie cristallisée, et
   la partie cristallisée représentant de préférence plus de 57%, voire plus de 67%, voire plus de 71% et de préférence moins de 86%, voire moins de 81% du produit fritté, en pourcentage massique sur la base du produit fritté, et
   la partie amorphe comportant plus de 90% d'une phase amorphe vitreuse de composition XₓAlₐSi_{b}O_{c} avec X choisi parmi Mg et optionnellement Ca, Sr, Sc, Y, les oxydes de lanthanides, Ti, Zr, Fe, Mn, Co, Cr et leurs mélanges, x, a, b, c étant des nombres entiers tels que x > 0, a+x > 0, b > 0, a/b ≤ 2, x/b ≤ 1, en pourcentage massique sur la base de la partie amorphe.
- Dans un mode de réalisation, en particulier lorsque le produit fritté est fabriqué suivant un procédé selon l'invention dans lequel le mélange particulaire comporte une deuxième fraction particulaire de CaAl₂Si₂O₃, le produit fritté tel que décrit présente
   - une teneur en Al₂O₃ supérieure à 3,5%, de préférence supérieure à 5,5% et de préférence inférieure à 27%, de préférence inférieure à 18,5%, de préférence inférieure à 15%, de préférence inférieure à 11,5%, de préférence inférieure à 9,5%, et
   - une teneur en CaO supérieure à 2%, de préférence supérieure à 3% et de préférence inférieure à 19%, de préférence inférieure à 10%, de préférence inférieure à 8%, de préférence inférieure à 6%, de préférence inférieure à 5%, et
   - une teneur en SiO₂ supérieure à 4%, de préférence supérieure à 6,5% et de préférence inférieure à 30%, de préférence inférieure à 21,5%, de préférence inférieure à 17,5%, de préférence inférieure à 13%, de préférence inférieure à 11%, et
   - une teneur en zircone de préférence supérieure à 40%, de préférence supérieure à 48%, de préférence supérieure à 52%, de préférence supérieure à 60%, de préférence supérieure à 65% et/ou inférieure à 93%, de préférence inférieure à 83%, et
   - une somme Y₂O₃+CeO₂+Sc₂O₃+MgO+CaO inférieure à 37%, de préférence inférieure à 28%, de préférence inférieure à 18% et une teneur en CaO+MgO inférieure à 24%, de préférence inférieure 15%, de préférence inférieure à 5%, et
   - une teneur en autres composés, c'est-à-dire des composés autres que ceux cités ci-dessus (MgO, Al₂O₃, ZrO₂, SiO₂, Y₂O₃, CeO₂, Sc₂O₃, CaO), de préférence des oxydes, inférieure 10%, voire inférieure à 8%, voire inférieure à 5%, voire inférieure à 3%, voire inférieure à 2%, voire inférieure à 1%, voire inférieure à 0,5%,
   la teneur en première phase cristallisée étant de préférence supérieure à 80%, voire supérieure à 90%, voire supérieure à 95%, en pourcentage massique sur la base de la partie cristallisée, et
   la partie cristallisée représentant de préférence plus de 57%, voire plus de 67%, voire plus de 71% et de préférence moins de 86%, voire moins de 81% du produit fritté, en pourcentage massique sur la base du produit fritté, et
   la partie amorphe comportant plus de 90% d'une phase amorphe vitreuse de composition XₓAlₐSi_{b}O_{c} avec X choisi parmi Ca et optionnellement Mg, Sr, Sc, Y, les oxydes de lanthanides, Ti, Zr, Fe, Mn, Co, Cr et leurs mélanges, x, a, b, c étant des nombres entiers tels que x > 0, a > 0, b > 0, a/b ≤ 2, x/b ≤ 1, en pourcentage massique sur la base de la partie amorphe.
- Dans un mode de réalisation, en particulier lorsque le produit fritté est fabriqué suivant un procédé selon l'invention dans lequel le mélange particulaire comporte une deuxième fraction particulaire de SrAl₂Si₂O₈, le produit fritté tel que décrit présente
   - une teneur en Al₂O₃ supérieure à 3%, de préférence supérieure à 4,5% et de préférence inférieure à 24%, de préférence inférieure à 15,5%, de préférence inférieure à 12,5%, de préférence inférieure à 9,5%, de préférence inférieure à 8%, et
   - une teneur en SrO supérieure à 3%, de préférence supérieure à 4,5% et de préférence inférieure à 25%, de préférence inférieure à 16%, de préférence inférieure à 13%, de préférence inférieure à 10%, de préférence inférieure à 8%, et
   - une teneur en SiO₂ supérieure à 3,5%, de préférence supérieure à 5,5% et de préférence inférieure à 27%, de préférence inférieure à 18,5%, de préférence inférieure à 15%, de préférence inférieure à 11%, de préférence inférieure à 9,5%, et
   - une teneur en zircone de préférence supérieure à 40%, de préférence supérieure à 48%, de préférence supérieure à 52%, de préférence supérieure à 60%, de préférence supérieure à 65% et/ou inférieure à 93%, de préférence inférieure à 83%, et
   - une somme Y₂O₃+CeO₂+Sc₂O₃+MgO+CaO inférieure à 18% et une teneur en CaO+MgO inférieure à 5%, voire inférieure à 3%, voire inférieure à 1%, et une teneur en Sc₂O₃ de préférence inférieure à 3%, de préférence inférieure à 1% et une teneur en Sc₂O₃ de préférence inférieure à 3%, de préférence inférieure à 1%, et
   - une teneur en autres composés, c'est-à-dire des composés autres que ceux cités ci-dessus (MgO, Al₂O₃, SrO, ZrO₂, SiO₂, Y₂O₃, CeO₂, Sc₂O₃, CaO), de préférence des oxydes, inférieure 10%, voire inférieure à 8%, voire inférieure à 5%, voire inférieure à 3%, voire inférieure à 2%, voire inférieure à 1%, voire inférieure à 0,5%,
   la teneur en (Sr,Ca)Al₂Si₂O₃ étant de préférence supérieure à 5%, voire supérieure à 8% et inférieure à 33%, voire inférieure à 25%, voire inférieure à 18%, voire inférieure à 14%, en pourcentage massique sur la base de la partie cristallisée, et
   la teneur en première phase cristallisée (le stabilisant étant de préférence choisi parmi Y₂O₃, CeO₂ et leurs mélanges) étant de préférence supérieure à 40%, de préférence supérieure à 50%, de préférence supérieure à 60%, de préférence supérieure à 67%, voire supérieure à 75%, voire supérieure à 82% et inférieure à 95%, voire inférieure à 92%, en pourcentage massique sur la base de la partie cristallisée, et
   la partie cristallisée représentant de préférence plus de 57%, voire plus de 67%, voire plus de 71% et de préférence moins de 90%, voire moins de 88%, voire moins de 83% du produit fritté, en pourcentage massique sur la base du produit fritté, et
   la partie amorphe comportant plus de 90% d'une phase amorphe vitreuse de composition XₓAlₐSi_{b}O_{c} avec X choisi parmi Sr et/ou Ca et optionnellement Mg, Sc, Y, les oxydes de lanthanides, Ti, Zr, Fe, Mn, Co, Cr et leurs mélanges, x, a, b, c étant des nombres entiers tels que x > 0, a > 0, c > 0, b > 0, a/b ≤ 2, x/b ≤ 1, en pourcentage massique sur la base de la partie amorphe.
- Dans un mode de réalisation, le produit fritté tel que décrit présente
   - une teneur en Al₂O₃ supérieure à 7%, de préférence supérieure à 10,5% et de préférence inférieure à 45%, de préférence inférieure à 36%, de préférence inférieure à 29%, de préférence inférieure à 22%, de préférence inférieure à 18%, et
   - une teneur en SiO₂ supérieure à 2,5%, de préférence supérieure à 4% et de préférence inférieure à 23%, de préférence inférieure à 14%, de préférence inférieure à 11,5%, de préférence inférieure à 8,5%, de préférence inférieure à 7%, et
   - une teneur en zircone de préférence supérieure à 40%, de préférence supérieure à 48%, de préférence supérieure à 52%, de préférence supérieure à 60%, de préférence supérieure à 65% et/ou inférieure à 93%, de préférence inférieure à 83%, et
   - une somme Y₂O₃+CeO₂+Sc₂O₃+MgO+CaO inférieure à 18% et une teneur en CaO+MgO inférieure à 5%, voire inférieure à 3%, voire inférieure à 1%, et une teneur en Sc₂O₃ de préférence inférieure à 3%, de préférence inférieure à 1%, et
   - une teneur en autres composés, c'est-à-dire des composés autres que ceux cités ci-dessus (MgO, Al₂O₃, ZrO₂, SiO₂, Y₂O₃, CeO₂, Sc₂O₃, CaO), de préférence des oxydes, inférieure 10%, voire inférieure à 8%, voire inférieure à 5%, voire inférieure à 3%, voire inférieure à 2%, voire inférieure à 1%, voire inférieure à 0,5%,
   la teneur en première phase cristallisée (le stabilisant étant de préférence choisi parmi Y₂O₃, CeO₂ et leurs mélanges) étant de préférence supérieure à 40%, de préférence supérieure à 50%, de préférence supérieure à 60%, de préférence supérieure à 67%, voire supérieure à 75%, voire supérieure à 82% et inférieure à 95%, voire inférieure à 92%, en pourcentage massique sur la base de la partie cristallisée, et la partie cristallisée représentant de préférence plus de 57%, voire plus de 67%, voire plus de 71% et de préférence moins de 90%, voire moins de 88%, voire moins de 83% du produit fritté, en pourcentage massique sur la base du produit fritté, et la partie amorphe comportant plus de 90% d'une phase amorphe vitreuse de composition XₓAlₐSi_{b}O_{c} avec X choisi parmi Sr, Ca, Mg, Sc, Y, les oxydes de lanthanides, Ti, Zr, Fe, Mn, Co, Cr et leurs mélanges, x, a, b, c étant des nombres entiers tels que a > 0, a+x > 0, c > 0, b > 0, a/b ≤ 2, x/b ≤ 1, en pourcentage massique sur la base de la partie amorphe.
- Dans un mode de réalisation, en particulier lorsque le produit fritté est fabriqué suivant un procédé selon l'invention dans lequel le mélange particulaire comporte une deuxième fraction particulaire de kaolinite, le produit fritté tel que décrit présente
   - une teneur en Al₂O₃ supérieure à 4,5%, de préférence supérieure à 7% et de préférence inférieure à 32%, de préférence inférieure à 23%, de préférence inférieure à 18,5%, de préférence inférieure à 14%, de préférence inférieure à 11,5%, et
   - une teneur en SiO₂ supérieure à 5%, de préférence supérieure à 8% et de préférence inférieure à 36%, de préférence inférieure à 27%, de préférence inférieure à 22%, de préférence inférieure à 16,5%, de préférence inférieure à 13,5%, et
   - une teneur en zircone de préférence supérieure à 40%, de préférence supérieure à 48%, de préférence supérieure à 52%, de préférence supérieure à 60%, de préférence supérieure à 65% et/ou inférieure à 93%, de préférence inférieure à 83%, et
   - une somme Y₂O₃+CeO₂+Sc₂O₃+MgO+CaO inférieure à 18% et une teneur en CaO+MgO inférieure à 5%, et
   - une teneur en autres composés, c'est-à-dire des composés autres que ceux cités ci-dessus (MgO, Al₂O₃, ZrO₂, SiO₂, Y₂O₃, CeO₂, Sc₂O₃, CaO), de préférence des oxydes, inférieure 10%, voire inférieure à 8%, voire inférieure à 5%, voire inférieure à 3%, voire inférieure à 2%, voire inférieure à 1%, voire inférieure à 0,5%,
   la teneur en Al₂O₃SiO₂ étant de préférence supérieure à 5%, voire supérieure à 8% et inférieure à 33%, voire inférieure à 25%, voire inférieure à 18%, voire inférieure à 14%, en pourcentage massique sur la base de la partie cristallisée, et
   la teneur en première phase cristallisée étant de préférence supérieure à 40%, de préférence supérieure à 50%, de préférence supérieure à 60%, de préférence supérieure à 67%, voire supérieure à 75%, voire supérieure à 82% et inférieure à 95%, voire inférieure à 92%, en pourcentage massique sur la base de la partie cristallisée, et la partie cristallisée représentant de préférence plus de 57%, voire plus de 67%, voire plus de 71% et de préférence moins de 90%, voire moins de 88%, voire moins de 83% du produit fritté, en pourcentage massique sur la base du produit fritté, et
   la partie amorphe comportant plus de 90% d'une phase amorphe vitreuse de composition XₓAlₐSi_{b}O_{c} avec X choisi parmi Sr, Ca, Mg, Sc, Y, les oxydes de lanthanides, Ti, Zr, Fe, Mn, Co, Cr et leurs mélanges, x, a, b, c étant des nombres entiers tels que a > 0, c > 0, b > 0, a/b ≤ 2, x/b ≤ 1, en pourcentage massique sur la base de la partie amorphe.
- Dans un mode de réalisation, en particulier lorsque le produit fritté est fabriqué suivant un procédé selon l'invention dans lequel le mélange particulaire comporte une deuxième fraction particulaire de montmorillonite, le produit fritté tel que décrit présente
   - une teneur en Al₂O₃ supérieure à 2,5%, de préférence supérieure à 4% et de préférence inférieure à 21%, de préférence inférieure à 13,5%, de préférence inférieure à 11%, de préférence inférieure à 8%, de préférence inférieure à 7%, et
   - une teneur en SiO₂ supérieure à 6%, de préférence supérieure à 9,5% et de préférence inférieure à 40%, de préférence inférieure à 31,5%, de préférence inférieure à 25%, de préférence inférieure à 19%, de préférence inférieure à 16%, et
   - une teneur en MgO supérieure à 1%, de préférence supérieure à 1,5% et de préférence inférieure à 14%, de préférence inférieure à 5%, de préférence inférieure à 4%, de préférence inférieure à 3%, de préférence inférieure à 2,5%, et
   - une teneur en zircone de préférence supérieure à 40%, de préférence supérieure à 48%, de préférence supérieure à 52%, de préférence supérieure à 60%, de préférence supérieure à 65% et/ou inférieure à 93%, de préférence inférieure à 83%, et
   - une somme Y₂O₃+CeO₂+Sc₂O₃+MgO+CaO inférieure à 32%, de préférence inférieure à 23, de préférence inférieure à 18% et une teneur en CaO+MgO inférieure à 19%, de préférence inférieure à 10%, de préférence inférieure à 5%, et
   - une teneur en autres composés, c'est-à-dire des composés autres que ceux cités ci-dessus (MgO, Al₂O₃, ZrO₂, SiO₂, Y₂O₃, CeO₂, Sc₂O₃, CaO), de préférence des oxydes, inférieure 10%, voire inférieure à 8%, voire inférieure à 5%, voire inférieure à 3%, voire inférieure à 2%, voire inférieure à 1%, voire inférieure à 0,5%, et
   la teneur en première phase cristallisée étant de préférence supérieure à 80%, voire supérieure à 90%, voire supérieure à 95%, en pourcentage massique sur la base de la partie cristallisée, et
   la partie cristallisée représentant de préférence plus de 57%, voire plus de 67%, voire plus de 71% et de préférence moins de 86%, voire moins de 81% du produit fritté, en pourcentage massique sur la base du produit fritté, et
   la partie amorphe comportant plus de 90% d'une phase amorphe vitreuse de composition XₓAlₐSi_{b}O_{c} avec X choisi parmi Mg et optionnellement Ca, Sr, Sc, Y, les oxydes de lanthanides, Ti, Zr, Fe, Mn, Co, Cr et leurs mélanges, x, a, b, c étant des nombres entiers tels que x > 0 <Mg et Al dans phase vitreuse obligatoirement>, a > 0, c > 0, b > 0, a/b ≤ 2, x/b ≤ 1, en pourcentage massique sur la base de la partie amorphe.
- De préférence, le produit fritté présente une partie cristallisée comportant plus de 50%, de préférence plus de 60%, voire plus de 70% et/ou moins de 85%, en pourcentage massique sur la base de la partie cristallisée, d'une phase cristallisée constituée de zircone, de préférence plus de 80%, de préférence plus de 90%, de préférence plus de 95%, de préférence plus de 99% de ladite zircone étant stabilisée au moyen d'un stabilisant sous une forme quadratique et/ou cubique, le complément étant sous une forme monoclinique.
- Dans un mode de réalisation, le produit fritté présente une partie cristallisée comportant plus de 15%, et moins de 40%, de préférence moins de 30%, de préférence moins de 25%, en pourcentage massique sur la base de la partie cristallisée, d'une deuxième phase cristallisée constituée par un composé choisi parmi MgAl₂O₄, XAlₘOₙ, avec X choisi parmi Mg, Ca, Sr, Y, les oxydes de lanthanides et leurs mélanges, m étant un nombre entier tel que 10 ≤ m ≤ 12, n étant un nombre entier tel que 16 ≤ n ≤ 20, Mg₃Al₂(SiO₄)₃, ZrSiO₄, les silicates d'yttrium, l'yttrium pouvant être partiellement substitué, X₂ZSi₂O₇ avec X choisi parmi La, Y, les oxydes de lanthanides et leurs mélanges et Z choisi parmi Mg, Al et leurs mélanges, Mg₂Al₃(Si₅AlO₁₈), (Ca,Sr)Al₂Si₂O₃, 3(Al₂O₃)2(SiO₂), les phases SiAlON, et leurs mélanges.

L'invention concerne un procédé selon la revendication 1.

Un mélange particulaire tel que décrit permet de fabriquer une pièce frittée en un produit fritté tel que décrit.

Dans un mode de réalisation préféré, le capot d'un dispositif tel que décrit est fabriqué suivant un procédé selon l'invention.

De préférence, un procédé selon l'invention comporte encore une, et de préférence plusieurs, des caractéristiques optionnelles suivantes :
- De préférence, le mélange particulaire présente une aire spécifique, calculée par la méthode BET, supérieure à 3 m²/g, de préférence supérieure à 5 m²/g, et/ou inférieure à 30 m²/g.
- De préférence, la première fraction particulaire représente plus de 70% et/ou moins de 85% du mélange particulaire, en pourcentage massique.
- De préférence, la taille médiane des particules de la première fraction particulaire est comprise entre 100 nm et 1000 nm.
- De préférence, la deuxième fraction particulaire représente plus de 15%, et/ou moins de 40% du mélange particulaire, en pourcentage massique.
- De préférence, la taille médiane des particules de la deuxième fraction particulaire est comprise entre 100 nm et 10000 nm, de préférence inférieure à 5000 nm.
- De préférence, plus de 25% en masse des particules de la deuxième fraction particulaire présentent un rapport longueur / largeur supérieur à 3.
- De préférence, la deuxième fraction particulaire est constituée de particules en un composé de formule XAlₘOₙ, avec X choisi parmi Mg, Ca, Sr, Y, les oxydes de lanthanides et leurs mélanges, m étant un nombre entier tel que 10 ≤ m ≤ 12, n étant un nombre entier tel que 16 ≤ n ≤ 20, et/ou de particules en un composé de formule XₓAlₐSi_{b}O_{c}(OH)_{y}(H₂O)_{z} avec X choisi parmi Mg, Ca, Sr, Sc, Y, les oxydes de lanthanides, Ti, Fe, Mn, Co, Cr et leurs mélanges, x, a, b, c, y, z étant des nombres entiers tels que x+a >0, c > 0, b > 0, a/b ≤ 2, x/b ≤ 1, y ≤ 3 (a+x), et z ≤ b et/ou de particules de Si₃N₄ et/ou de particules d'AlN et/ou de particules d'AlON et/ou de particules de Si₂ON₂ et/ou de particules en un mélange de ces composés. De préférence, la deuxième fraction particulaire est constituée de particules de MgAl₁₂O₁₉ et/ou de particules de LaAl₁₁O₁₈ et/ou de particules en un orthosilicate et/ou de particules en un sorosilicate et/ou de particules en un cyclosilicate et/ou de particules en un inosilicate et/ou de particules en un phyllosilicate et/ou de particules en un tectosilicate et/ou de particules en une argile et/ou de particules en un mélange de ces composés.
- Dans un mode de réalisation préféré, la deuxième fraction particulaire est constituée
   - de particules de MgAl₁₂O₁₉ de préférence sous la forme de particules présentant un rapport longueur / largeur supérieur à 3, voire supérieur à 5, voire supérieur à 7, voire supérieur à 10 ;
   - de particules de LaAl₁₁O₁₈ de préférence sous la forme de particules présentant un rapport longueur / largeur supérieur à 3, voire supérieur à 5, voire supérieur à 7, voire supérieur à 10 ;
   - de particules de grenat Mg₃Al₂(SiO₄)₃ ;
   - de particules d'épidote Ca₂Al₃(SiO₄)(Si₂O₇)OOH;
   - de particules d'un silicate d'yttrium, comme Y₂Si₂O₇, l'yttrium pouvant être partiellement substitué par Sc : (Sc,Y)₂Si₂O₇ ;
   - de particules de mélilite X₂ZSi₂O₇ avec X choisi parmi Y, les oxydes de lanthanides et leurs mélanges et Z choisi parmi Mg, Al et leurs mélanges ;
   - de particules de cordiérite Mg₂Al₃(Si₅AlO₁₈) ;
   - de particules d'un amphibole de formule (Ca, Al, Mg)₇Si₈O₂₂(OH)₂ ;
   - de particules de talc Mg₃Si₄O₁₀(OH)₂ ;
   - de particules d'un feldspath (Ca, Sr) Al₂Si₂O₃ ;
   - de particules de kaolinite Si₂O₅Al₂(OH)₄ ;
   - de particules de montmorillonite Si₄O₁₀(Al,Mg)₃(OH)₂ ;
   - de particules de vermicullite (Mg,Ca)(MgAl)₆(Al,Si)₃O₂₂(OH)₄.8H₂O ;
   - ou d'un mélange de telles particules.
- De préférence, la taille médiane des particules de la troisième fraction particulaire est inférieure à 1000 nm, voire inférieure à 500 nm.
- La quatrième fraction particulaire représente de préférence moins de 0,5 %, de préférence moins de 0,2 %, de préférence moins de 0,1 % du mélange particulaire, en pourcentage massique. De préférence, la quatrième fraction particulaire est constituée des impuretés.
- Dans un mode de réalisation, les oxydes représentent plus de 98 %, plus de 99 %, voire sensiblement 100 % de la masse du mélange particulaire.
- A l'étape c), la préforme est frittée, de préférence à une température comprise entre 1200°C et 1500°C.

### Définitions

- On appelle « frittage » une consolidation par traitement thermique à plus de 1100°C d'un agglomérat particulaire, avec éventuellement une fusion, partiellement ou totale, de certains des constituants de cet agglomérat (mais pas de tous ces constituants).
- Une structure cristallographique pérovskite correspond à un agencement particulier d'éléments dans des sites classiquement appelés « sites A » et « sites B ». On appelle habituellement « éléments A » et « éléments B » les éléments disposés sur les sites A et B, respectivement.
   Parmi les composés présentant une structure cristallographique pérovskite, on distingue en particulier les « oxydes de structure pérovskite ». Ces oxydes comprennent notamment des composés de formule ABO₃. Tous les sites A et/ou B ne sont pas toujours occupés par des éléments A et/ou B, respectivement.
   Par exemple, un oxyde de lanthane - manganèse (LM) de structure pérovskite est un composé où A est du lanthane et B du manganèse. Sa structure est classiquement définie par une formule du type *LaMnO*₃*.* Un autre exemple peut être un oxyde de lanthane - cobalt - fer - manganèse de structure pérovskite où A est du lanthane et B un mélange de cobalt, de fer et de manganèse défini par une formule du type *La CoₓFe_{y}Mn_{z}O*₃, avec x + y + z = 1, x, y et z étant les fractions molaires des éléments cobalt, fer et manganèse, respectivement.
- Une structure cristallographique spinelle correspond à un agencement particulier d'éléments C et D dans des sites classiquement appelés « sites octaédriques » et « sites tétraédriques ».
   Les composés présentant une structure cristallographique spinelle comprennent notamment les composés de formule CD₂O₄ appelés « spinelles directs », dans lesquels l'élément C occupe un site tétraédrique et l'élément D occupe un site octaédrique, et les composés de formules D(C,D)O₄, appelés « spinelles inverses », dans lesquels l'élément D occupe des sites tétraédriques et octaédriques et l'élément C occupe un site octaédrique.
   Par exemple, un oxyde de cobalt - chrome de structure spinelle direct est un composé où C est du cobalt, disposé sur des sites C, et D du chrome, disposé sur des sites D. Sa structure est classiquement définie par une formule du type *CoCr*₂*O*₄. Un autre exemple de spinelle est le spinelle inverse TiFe₂O₄, où C est du titane disposé sur des sites D, et D est du fer disposé sur des sites C et des sites D. Un autre exemple peut être un oxyde de cobalt - fer - chrome de structure spinelle où C est un mélange de cobalt et de fer et D un mélange de fer et de chrome défini par une formule du type (*CoₓFe_{y}*)(*Fe_{z}Crₜ*)₂*O*₄, avec x + y = 1 et z+t = 1, x, y+z et t étant les fractions molaires des éléments cobalt, fer et chrome, respectivement, x et y étant les fractions molaires des éléments présents en sites C, et z et t étant les fractions molaires des éléments présents en sites D.
- Une structure cristallographique hématite correspond à un agencement particulier d'éléments dans des sites classiquement appelés « sites E ». On appelle habituellement « éléments E » les éléments disposés sur les sites E.
   Parmi les composés présentant une structure cristallographique hématite, on distingue en particulier les « oxydes de structure hématite ». Ces oxydes comprennent notamment des composés de formule E₂O₃.
   Par exemple, un oxyde de manganèse - aluminium de structure hématite est un composé où E est un mélange de manganèse et d'alumine. Sa structure est classiquement définie par une formule du type (*MnₓAl_{y}*)₂*O*₃, avec x + y = 1, x et y étant les fractions molaires des éléments manganèse et aluminium, respectivement.
- Une structure cristallographique rutile correspond à un agencement particulier d'éléments dans des sites classiquement appelés « sites F ». On appelle habituellement « éléments F » les éléments disposés sur les sites F.
   Parmi les composés présentant une structure cristallographique rutile, on distingue en particulier les « oxydes de structure rutile ». Ces oxydes comprennent notamment des composés de formule FO₂.
   Par exemple, un oxyde de manganèse - niobium - titane de structure rutile est un composé où F est un mélange de manganèse de niobium et de titane. Sa structure est classiquement définie par une formule du type (*MnₓNb_{y}Ti_{z}*)*O*₂, avec x + y + z = 1, x, y et z étant les fractions molaires des éléments manganèse, niobium et titane.
- Un élément A, B, C, D, E, ou F peut comporter plusieurs constituants, une fraction molaire d'un de ces constituants fait référence à la fraction molaire de ce constituant dans ledit élément.
- Dans une composition chimique, les teneurs en oxydes se rapportent aux teneurs globales pour chacun des éléments chimiques correspondants, exprimées sous la forme de l'oxyde le plus stable, en ne considérant que les composés oxydes. Par exemple, « SiO₂ » mesure la quantité de silicium sous la forme de composés oxydes, en considérant tous les composés oxydes de silicium possibles : SiO₂, les silicates, etc. En revanche la quantité de silicium sous la forme Si₃N₄, qui n'est pas un composé oxyde, n'est pas comptabilisée dans « SiO₂ ».
- Par « impuretés », on entend les constituants inévitables, introduits nécessairement avec les matières premières ou résultant de réactions avec ces constituants. Les impuretés ne sont pas des constituants nécessaires, mais seulement tolérés. En particulier, les composés faisant partie du groupe des oxydes, nitrures, oxynitrures, carbures, oxycarbures, carbonitrures et espèces métalliques de sodium et autres alcalins sont des impuretés. A titre d'exemples, on peut citer Na₂O. En revanche, l'oxyde d'hafnium n'est pas considéré comme une impureté. On considère que, dans un produit fritté tel que décrit ou dans une charge de départ tel que décrite, une teneur totale en impuretés inférieure à 2 % ne modifie pas substantiellement les résultats obtenus.
- Dans une source de particules de zircone, HfO₂ n'est pas chimiquement dissociable de ZrO₂. « ZrO₂ » désigne donc classiquement la teneur totale de ces deux oxydes. Selon la présente invention, HfO₂ n'est pas ajouté volontairement dans la charge de départ. HfO₂ ne désigne donc que les traces d'oxyde d'hafnium, cet oxyde étant toujours naturellement présent dans les sources de zircone à des teneurs généralement inférieures à 2 %. Par souci de clarté, on peut donc désigner indifféremment la teneur en zircone et en traces d'oxyde d'hafnium par « ZrO₂ », on encore par « teneur en zircone ».
- On appelle « zircone stabilisée », une zircone stabilisée avec un stabilisant et constituée pour plus de 80 %, voire plus de 90 %, voire plus de 95 %, voire sensiblement 100 %, en volume, de phase quadratique et/ou cubique, le complément à 100 % étant constitué de phase monoclinique. La quantité de zircone stabilisée est mesurée par diffraction X. Sur une pièce massive, la surface de mesure est polie, la dernière étape de polissage étant réalisée avec une préparation diamantée Mecaprex LD32-E 1µm commercialisée par la société PRESI, après que la pièce a subi un traitement thermique à 1000°C pendant 1 heure et a été refroidie à température ambiante. Sur une poudre, la mesure est effectuée directement sur la poudre, sans broyage préalable.
- On appelle « précurseur » d'un produit un composé ou un ensemble de composés qui, lors d'un frittage à l'étape c), sous air, conduisent à la formation dudit produit. Dans le cas particulier d'un oxyde de structure pérovskite, un précurseur dudit oxyde de structure pérovskite est un composé constitué d'un mélange intime des oxydes et/ou des précurseurs des oxydes composant ledit oxyde de structure pérovskite. Un tel mélange intime peut par exemple être obtenu par coprécipitation ou atomisation. De préférence, le mélange intime est consolidé par un traitement thermique. Par exemple, si l'on considère un oxyde de lanthane - cobalt - fer - manganèse de structure pérovskite de formule *LaCoₓFe_{y}Mn_{z}O*₃, avec x + y + z = 1, x, y et z étant les fractions molaires des éléments cobalt, fer et manganèse, respectivement, un précurseur de cet oxyde de structure pérovskite est un mélange intime d'oxyde de lanthane, d'oxyde de cobalt, d'oxyde de fer et d'oxyde de manganèse. Un autre précurseur possible est un mélange intime de précurseurs de ces oxydes, comme par exemple un mélange intime de nitrate de lanthane, de nitrate de cobalt, de nitrate de fer et de nitrate de manganèse.
- Une quantité d'un précurseur d'un produit est dite « équivalente » à une quantité dudit produit lorsque, lors du frittage, elle conduit à ladite quantité dudit produit.
- Par « temporaire », on entend « pouvant être éliminé de la préforme pendant le frittage ».
- On appelle « taille moyenne » des grains d'une pièce frittée, la dimension mesurée selon la méthode de « Mean Linear Intercept » décrite dans la norme ASTM E1382-97. Les résultats obtenus par cette norme ont été multipliés par un coefficient correcteur égal à 1,56 pour tenir compte de l'aspect tridimensionnel.
- On appelle « taille médiane » d'un ensemble de particules, généralement notée D₅₀, la taille divisant les particules de cet ensemble en première et deuxième populations égales en masse, ces première et deuxième populations ne comportant que des particules présentant une taille supérieure, ou inférieure respectivement, à la taille médiane.
- Les percentiles ou « centiles » 10 (D₁₀) et 90 (D₉₀) sont les tailles de particule correspondant aux pourcentages, en masse, de 10 % et 90 %, respectivement, sur la courbe de distribution granulométrique cumulée des tailles de particules de la poudre, les tailles de particules étant classées par ordre croissant. Par exemple, 10 %, en masse, des particules de la poudre ont une taille inférieure à D₁₀ et 90 % des particules en masse ont une taille supérieure à D₁₀. Les percentiles peuvent être déterminés à l'aide d'une distribution granulométrique réalisée à l'aide d'un granulomètre laser.
- La longueur d'une particule est sa plus grande dimension. La largeur d'une particule est sa plus grande dimension perpendiculairement à la direction de sa longueur.
- L'aire spécifique est calculée par la méthode BET (Brunauer Emmet Teller) telle que décrite dans Journal of American Chemical Society 60 (1938), pages 309 à 316.
- Sauf mention contraire,dans les formules, les indices sont des fractions molaires.
- Sauf mention contraire, tous les pourcentages sont des pourcentages massiques.
- Sauf mention contraire, par « comportant un » ou « comprenant un », on entend « comportant au moins un ». Un mélange particulaire tel que décrit peut ainsi comporter, par exemple, un premier pigment en un oxyde de structure pérovskite et un deuxième pigment en un oxyde de structure spinelle.
- La définition générique de la composition des particules d'un ensemble de particules, par exemple au moyen d'une formule ou d'une structure, signifie que cet ensemble peut être constitué de particules présentant toutes la même composition ou différentes compositions, chaque particule ayant une composition respectant ladite définition générique. Par exemple, dans un ensemble de « particules en un composé de formule XAlₘOₙ », X et/ou m et/ou n peuvent être différent(s) selon la particule considérée. De même, un ensemble comportant des particules en un orthosilicate de zirconium et de praséodyme et des particules en un orthosilicate de zirconium est un ensemble de « particules en un composé choisi dans le groupe des orthosilicates de zirconium et de praséodyme (Zr,Pr)SiO₄, des orthosilicates de zirconium et de vanadium (Zr,V)SiO₄, et des orthosilicates de zirconium ». De même un ensemble constitué de particules en différentes cordiérites est un ensemble de « particules en une cordiérite » ou un ensemble constitué de particules en différents oxyde de structure spinelle est un ensemble de particules « en un oxyde de structure spinelle ». Plus généralement, l'expression « particules en un oxyde » d'une structure déterminée, ladite structure pouvant correspondre à n oxydes différents, par exemple « particules en un oxyde de structure pérovskite », inclut tout ensemble de particules dont chaque particule est constituée en un oxyde présentant ladite structure, cet ensemble pouvant contenir des particules en chacun des n oxydes.
- Les phases SiAlON cristallisées et les composés SiAION respectent l'une des formules suivantes :
   - SiₜAl_{w}OᵤNᵥ, dans laquelle :
      - t est supérieur ou égal à 0, supérieur à 0,05, supérieur à 0,1 ou supérieur à 0,2, et inférieur ou égal à 1, inférieur ou égal à 0,8 ou inférieur ou égal à 0,4,
      - w est supérieur ou égal à 0, ou supérieur à 0,1, supérieur à 0,3 ou supérieur à 0,5, et inférieur ou égal à 1,
      - u est supérieur ou égal à 0, supérieur à 0,1 ou supérieur à 0,2, et inférieur ou égal à 1 ou inférieur ou égal à 0,7,
      - v est supérieur à 0, supérieur à 0,1, supérieur à 0,2 ou supérieur à 0,5, ou supérieur à 0,7, et inférieur ou égal à 1,
      - t+w > 0,
      t, w, u et v étant des indices stoechiométriques et normalisés par rapport à celui qui est le plus élevé, rendu égal à 1 ;
   - MeₛSi_{12-(q+r)}Al_{(q+r)}OᵣN₁₆₋ᵣ, avec 0 ≤ s ≤ 2, Me un cation choisi parmi les cations de lanthanides, Fe, Y, Ca et leurs mélanges, 0 ≤ q ≤ 12, 0 ≤ r ≤ 12 et q+r ≤ 12, généralement appelés « α'-SiAlON » ou « SiAlON-α'».

   Les phases SiAlON cristallisées et les composés SiAION peuvent donc contenir :
   o des phases AlN et/ou un de ses polytypes, notamment 2H, 8H, 12H, 15R, 21R, et 27R, de formule Si_{t'}Al_{w'}O_{u'}N_{v'}, dans laquelle les indices stoechiométriques t', w', u' et v', normalisés par rapport à l'indice le plus élevé rendu égal à 1, sont tels que 0 ≤ t' ≤ 0,37 et 0,60 ≤ w' ≤ 1 et 0 ≤ u' ≤ 0,71 et 0,76 ≤ v' ≤ 1 ;
   o des phases de formule Si_{t"}Al_{w"}O_{u"}N_{v"}, dans laquelle les indices stoechiométriques t", w", u" et v", normalisés par rapport à l'indice le plus élevé rendu égal à 1, sont tels que 0,43 ≤ t" ≤ 0,75 et 0 ≤ w" ≤ 1 et 0 ≤ u" ≤ 1 et 0,9 ≤ v" ≤1, dites « SiAlON-β' ». Les phases cristallisées « SiAlON-β' » peuvent encore s'exprimer avec la formule Si_{6-z}Al_{z}O_{z}N_{8-z}, dans laquelle l'indice z est un indice stoechiométrique tel que 0 ≤ z< 4,2 ;
   o des phases de formule Si_{t"'}Al_{w"'}O_{u"}N_{v"'}, dans laquelle les indices stoechiométriques t"', w"', u"' et v"', normalisés par rapport à l'indice le plus élevé rendu égal à 1, sont tels que t"' = 1 et 0 ≤ w"' ≤ 0,11 et 0,5 ≤ u"' ≤ 0,67 et v"' = 1, dites « SiAlON-O' ». Les phases cristallisées « SiAlON-O' » peuvent encore s'exprimer avec la formule Si_{2-z}Al_{z'}O_{1+z}N_{2-z'}, dans laquelle l'indice z' est un indice stoechiométrique tel que 0 ≤ z< 0,2 ;
   _{∘} Si₃N₄;
   ∘ Si₂ON₂ ;
   ∘ AlON.
- Classiquement, « Si₃N₄ » désigne toutes les formes de Si₃N₄ (à savoir Si₃N₄-α et Si₃N₄-β).
- On appelle « lanthanides » les éléments chimiques de numéro atomique compris entre 57 (lanthane) et 71 (lutécium), le lanthane et le lutécium étant compris dans lesdits lanthanides.

### Description détaillée

**A l'étape a),** on prépare un mélange particulaire tel que décrit.

De préférence, le mélange particulaire présente une aire spécifique, calculée par la méthode BET, supérieure à 3 m²/g, de préférence supérieure à 5 m²/g, et/ou inférieure à 30 m²/g, de préférence inférieure à 25 m²/g, de préférence inférieure à 20 m²/g. De préférence encore, il présente une taille médiane (D₅₀) inférieure à 10 µm, voire inférieure à 5 µm, voire inférieure à 3 µm, voire inférieure à 1 µm, et/ou de préférence supérieure à 0,05 µm.

Un broyage peut être mis en oeuvre pour que chacune des poudres utilisées à l'étape a) ou pour que le mélange particulaire présente les caractéristiques granulométriques souhaitées, en particulier pour obtenir une bonne densification de la pièce frittée. En particulier, un broyage peut être mis en oeuvre pour que la première fraction particulaire présente une taille médiane (D₅₀) inférieure à 1000 nm et/ou pour que la deuxième fraction particulaire présente une taille (D₅₀) inférieure à 10000 nm.

Le mélange particulaire comporte des première et deuxième fractions particulaires, les autres fractions particulaires étant optionnelles.

Les première, deuxième, troisième et quatrième fractions particulaires ne sont pas nécessairement ajoutées séparément dans le mélange particulaire. Le terme « fraction particulaire » signifie seulement qu'à partir de le mélange particulaire, il est possible de séparer les particules de manière à constituer les première, deuxième, troisième et quatrième fractions particulaires.

Dans un mode de réalisation, le mélange particulaire est constitué des première, deuxième et quatrième fractions particulaires.

Dans un mode de réalisation, le mélange particulaire est constitué des première, deuxième, troisième et quatrième fractions particulaires.

### Première fraction particulaire

De préférence, la première fraction particulaire représente plus de 70%, voire plus de 75%, et/ou moins de 85% du mélange particulaire, en pourcentage massique.

De préférence, la taille médiane des particules de la première fraction particulaire est comprise entre 100 nm et 1000 nm, de préférence inférieure à 800 nm, voire inférieure à 500 nm. De préférence, la courbe de répartition granulométrique de la première fraction particulaire est telle que le rapport (D₉₀-D₁₀)/D₅₀ soit inférieur à 10, voire inférieur à 5, voire inférieur à 3, voire inférieur à 2.

Dans un mode de réalisation, pourvu que la deuxième fraction particulaire comporte moins de 25% en masse de particules présentant un rapport longueur / largeur supérieur à 3, plus de 25%, voire plus de 40%, voire plus de 50% en masse des particules de la première fraction particulaire présentent un rapport longueur / largeur supérieur à 3, voire supérieur à 5, voire supérieur à 7, voire supérieur à 10. Avantageusement, les propriétés mécaniques de la pièce frittée obtenue en fin d'étape c) en sont améliorées.

Les particules de zircone de la première fraction particulaire comportent un composé apte à stabiliser la zircone choisi parmi Y₂O₃, Sc₂O₃, MgO, CaO, CeO₂ et leurs mélanges, en une quantité supérieure à 2,0% et inférieure à 20,0%, calculée sur la base de la somme de ZrO₂, Y₂O₃, Sc₂O₃, MgO, CaO et CeO₂, la teneur MgO + CaO étant inférieure à 5,0% sur la base de la somme de ZrO₂, Y₂O₃, Sc₂O₃, MgO, CaO et CeO₂.

Le composé apte à stabiliser la zircone peut être choisi dans le groupe formé par Y₂O₃, Sc₂O₃ et leurs mélanges, la teneur du composé apte à stabiliser la zircone étant alors de préférence inférieure à 8%, de préférence inférieure à 6,5%, ou dans le groupe formé par MgO, CaO et leurs mélanges, la teneur du composé apte à stabiliser la zircone étant alors de préférence inférieure à 4%, ou dans le groupe formé par Y₂O₃, CeO₂ et leurs mélanges, la teneur du composé apte à stabiliser la zircone respectant alors, de préférence, la relation 10% ≤ 3.Y₂O₃ + CeO₂ ≤ 20%, les pourcentages étant des pourcentages massiques sur la base de la somme de ZrO₂, Y₂O₃, Sc₂O₃, MgO, CaO et CeO₂.

Dans un mode de réalisation, le composé apte à stabiliser la zircone est CeO₂, c'est-à-dire que la première fraction particulaire ne comporte que CeO₂ comme composé apte à stabiliser la zircone, la teneur du composé apte à stabiliser la zircone étant alors de préférence supérieure à 10% et inférieure à 15%, en pourcentage massique sur la base de la somme de ZrO₂, Y₂O₃, Sc₂O₃, MgO, CaO et CeO₂.

Dans un mode de réalisation, le composé apte à stabiliser la zircone est Y₂O₃, c'est-à-dire que la première fraction particulaire ne comporte que Y₂O₃ comme composé apte à stabiliser la zircone, la teneur du composé apte à stabiliser la zircone étant alors de préférence supérieure à 3%, de préférence supérieure à 4%, et/ou inférieure à 8%, de préférence inférieure à 6,5%, en pourcentage massique sur la base de la somme de ZrO₂, Y₂O₃, Sc₂O₃, MgO, CaO et CeO₂

La zircone, stabilisée ou non, et au moins une partie, voire la totalité du composé apte à stabiliser la zircone sont de préférence intimement mélangés. Un tel mélange intime peut par exemple être obtenu par co-précipitation ou atomisation, et être éventuellement consolidé par un traitement thermique.

une partie, voire la totalité du composé apte à stabiliser la zircone peut également stabiliser la zircone, le composé apte à stabiliser la zircone étant alors classiquement appelé « stabilisant ».

Dans la première fraction particulaire, la zircone est de préférence pour plus de 50%, de préférence plus de 80%, de préférence plus de 90%, de préférence plus de 95%, de préférence plus de 99%, en masse sous une forme cristallographique quadratique et/ou cubique, le complément étant sous une forme cristallographique monoclinique.

### Deuxième fraction particulaire

De préférence, la deuxième fraction particulaire représente plus de 15%, et/ou moins de 40% de préférence moins de 30%, de préférence moins de 25% du mélange particulaire, en pourcentage massique.

De préférence, la taille médiane des particules de la deuxième fraction particulaire est comprise entre 100 nm et 10000 nm, de préférence inférieure à 5000 nm, voire inférieure à 1000 nm. De préférence, la courbe de répartition granulométrique de la deuxième fraction particulaire est telle que le rapport (D₉₀-D₁₀)/D₅₀ soit inférieur à 10, voire inférieur à 5, voire inférieur à 3, voire inférieur à 2.

De préférence, plus de 25%, voire plus de 40%, voire plus de 50% en masse des particules de la deuxième fraction particulaire présentent un rapport longueur / largeur supérieur à 3, voire supérieur à 5, voire supérieur à 7, voire supérieur à 10. Avantageusement, les propriétés mécaniques de la pièce frittée obtenue en fin d'étape c) en sont améliorées.

De préférence, la deuxième fraction particulaire est constituée de particules en un composé de formule XAlₘOₙ, avec X choisi parmi Mg, Ca, Sr, Y, les oxydes de lanthanides et leurs mélanges, m étant un nombre entier tel que 10 ≤ m ≤ 12, n étant un nombre entier tel que 16 ≤ n ≤ 20, et/ou de particules en un composé de formule XₓAlₐSi_{b}O_{c}(OH)_{y}(H₂O)_{z} avec X choisi parmi Mg, Ca, Sr, Sc, Y, les oxydes de lanthanides, Ti, Fe, Mn, Co, Cr et leurs mélanges, x, a, b, c, y, z étant des nombres entiers tels que x+a >0, c > 0, b > 0, a/b ≤ 2, x/b ≤ 1, y ≤ 3 (a+x), et z ≤ b et/ou de particules de Si₃N₄ et/ou de particules d'AIN et/ou de particules d'AION et/ou de particules de Si₂ON₂ et/ou de particules en un mélange de ces composés (par exemple des particules constituées de MgAl₂O₄ et de Mg₂Al₃(Si₅AlO₁₈).

De préférence, la deuxième fraction particulaire est constituée de particules de MgAl₁₂O₁₉ et/ou de particules de LaAl₁₁O₁₈ et/ou de particules en un composé de formule XₓAlₐSi_{b}O_{c}(OH)_{y}(H₂O)_{z} avec X choisi parmi Mg, Ca, Sr, Sc, Y, les oxydes de lanthanides, Ti, Fe, Mn, Co, Cr et leurs mélanges, x, a, b, c, y, z étant des nombres entiers tels que x+a >0, c > 0, b > 0, a/b ≤ 2, x/b ≤ 1, y ≤ 3 (a+x), et z ≤ b et/ou de particules en un mélange de ces composés.

De préférence, la deuxième fraction particulaire est constituée de particules de MgAl₁₂O₁₉ et/ou de particules de LaAl₁₁O₁₈ et/ou de particules en un orthosilicate et/ou de particules en un sorosilicate et/ou de particules en un cyclosilicate et/ou de particules en un inosilicate et/ou de particules en un phyllosilicate et/ou de particules en un tectosilicate et/ou de particules en une argile et/ou de particules en un mélange de ces composés.

De préférence, les particules en un orthosilicate sont des particules en grenat Mg₃Al₂(SiO₄)₃ et/ou des particules en grossulaire Ca₃Al₂(SiO₄)₃ et/ou des particules en sphène CaTiSiO₅ et/ou des particules en un mélange de ces composés.

De préférence, les particules en un sorosilicate sont des particules en épidote Ca₂Al₃(SiO₄)(Si₂O₇)OOH et/ou des particules en un silicate d'yttrium, comme Y₂Si₂O₇, l'yttrium pouvant être partiellement substitué par Sc : (Sc,Y)₂Si₂O₇ et/ou des particules de mélilite X₂ZSi₂O₇ avec X choisi parmi Y, les oxydes de lanthanides et leurs mélanges et Z choisi parmi Mg, Al et leurs mélanges et/ou des particules en un mélange de ces composés.

De préférence, les particules en un cyclosilicate sont des particules en une cordiérite, de préférence en Mg₂Al₃(Si₅AlO₁₈).

De préférence, les particules en un inosilicate sont des particules en un pyroxène, comme MgSiO₃ et (Ca,Mg)Si₂O₆ et/ou des particules en un amphibole de formules (Ca, Al, Mg)₇Si₈O₂₂(OH)₂ et/ou des particules en un mélange de ces composés. De préférence, les particules en un inosilicate sont des particules en un amphibole de formule (Ca, Al, Mg)₇Si₈O₂₂(OH)₂.

De préférence, les particules en un phyllosilicate sont des particules de serpentine Mg₃Si₂O₅(OH)₄ et/ou des particules de talc Mg₃Si₄O₁₀(OH)₂ et/ou des particules de pyrophyllite Al₂Si₄O₁₀(OH)₂ et/ou des particules en un mélange de ces composés. De préférence, les particules en un phyllosilicate sont des particules de talc Mg₃Si₄O₁₀(OH)₂.

De préférence, les particules en un tectosilicate sont des particules en un feldspath, de préférence en (Ca, Sr) Al₂Si₂O₈.

De préférence, les particules en une argile sont des particules en une kaolinite et/ou des particules en une montmorillonite et/ou des particules en une vermicullite et/ou des particules en un mélange de ces composés. De préférence, les particules en une argile sont des particules en kaolinite Si₂O₅Al₂(OH)₄ et/ou des particules en montmorillonite Si₄O₁₀(Al,Mg)₃(OH)₂ et/ou des particules en vermicullite (Mg,Ca)(MgAl)₆(Al,Si)₃O₂₂(OH)₄.8H₂O et/ou des particules en un mélange de ces composés.

Dans un mode de réalisation préféré, la deuxième fraction particulaire est constituée
- de particules de MgAl₁₂O₁₉ de préférence sous la forme de particules présentant un rapport longueur / largeur supérieur à 3, voire supérieur à 5, voire supérieur à 7, voire supérieur à 10 ;
- de particules de LaAl₁₁O₁₈ de préférence sous la forme de particules présentant un rapport longueur / largeur supérieur à 3, voire supérieur à 5, voire supérieur à 7, voire supérieur à 10 ;
- de particules de grenat Mg₃Al₂(SiO₄)₃ ;
- de particules d'épidote Ca₂Al₃(SiO₄)(Si₂O₇)OOH;
- de particules d'un silicate d'yttrium, comme Y₂Si₂O₇, l'yttrium pouvant être partiellement substitué par Sc : (Sc,Y)₂Si₂O₇ ;
- de particules de mélilite X₂ZSi₂O₇ avec X choisi parmi Y, les oxydes de lanthanides et leurs mélanges et Z choisi parmi Mg, Al et leurs mélanges, et leurs mélanges ;
- de particules de cordiérite Mg₂Al₃(Si₅AlO₁₈) ;
- de particules d'un amphibole de formules (Ca, Al, Mg)₇Si₈O₂₂(OH)₂ ;
- de particules de talc Mg₃Si₄O₁₀(OH)₂ ;
- de particules d'un feldspath (Ca, Sr) Al₂Si₂O₈ ;
- de particules de kaolinite Si₂O₅Al₂(OH)₄ ;
- de particules de montmorillonite Si₄O₁₀(Al,Mg)₃(OH)₂ ;
- de particules de vermicullite (Mg,Ca)(MgAl)₆(Al,Si)₈O₂₂(OH)₄.8H₂O ;
- ou d'un mélange de telles particules.

### Troisième fraction particulaire

La troisième fraction particulaire peut représenter plus de 0,5%, et/ou moins de 8% du mélange particulaire, en pourcentage massique sur la base du mélange particulaire.

Les inventeurs ont découvert que si la troisième fraction particulaire représente plus de 10,0% du mélange particulaire, les propriétés mécaniques, notamment de ténacité, des pièces frittées fabriquées sont dégradées. Cette dégradation est problématique en particulier lorsque les pièces frittées sont destinées à la fabrication de capots exposés à l'extérieur.

une teneur minimale de 0,5 % de la troisième fraction particulaire dans le mélange particulaire contribue à l'obtention de couleurs bien développées et homogènes.

De préférence, la taille médiane des particules de la troisième fraction particulaire est inférieure à 1000 nm, voire inférieure à 500 nm. Avantageusement, l'efficacité de ces particules dans la pièce frittée en est améliorée.

De préférence, la troisième fraction particulaire est constituée
- de particules en un oxyde de structure pérovskite, optionnellement remplacé(s), totalement ou en partie, par une quantité équivalente de précurseur(s) de ces oxydes, et/ou de particules en un mélange de pérovskites et/ou de précurseur(s) de pérovskite, et/ou
- de particules en un oxyde de structure spinelle et/ou de particules en un mélange de spinelles et/ou
- de particules en un oxyde de structure rutile FO₂, l'élément F étant choisi dans le groupe G_{F}(1) formé par les mélanges d'étain et de vanadium, les mélanges de titane et de chrome et de niobium, les mélanges de titane et de chrome et de tungstène, les mélanges de titane et de niobium et de manganèse, les mélanges d'étain et de chrome, et/ou de particules en un mélange de ces composés, et/ou
- de particules en un oxyde de structure hématite E₂O₃, l'élément E étant choisi dans le groupe G_{E}(1) formé par les mélanges d'aluminium et de chrome, les mélanges d'aluminium et de manganèse, et/ou de particules en un mélange de ces composés, et/ou
- de particules en un orthosilicate de zirconium et de praséodyme (Zr,Pr)SiO₄ et/ou de particules en un orthosilicate de zirconium et de vanadium (Zr,V)SiO₄, et/ou de particules en un orthosilicate de zirconium dans lequel se trouve de l'oxyde de fer en inclusion.

Avantageusement, la pièce frittée présente une couleur particulièrement décorative.

De préférence, la troisième fraction particulaire est constituée :
- de particules en un oxyde de structure pérovskite ABO₃ pouvant comporter une, voire plusieurs, des caractéristiques optionnelles suivantes :
   - l'élément A au site A de la structure pérovskite est choisi dans le groupe G_{A}(1) formé par le calcium Ca, le strontium Sr, le baryum Ba, le lanthane La, le praséodyme Pr, le néodyme Nd, le bismuth Bi, le cérium Ce, et leurs mélanges ;
   - De préférence, A est choisi dans le groupe G_{A}(2) formé par le lanthane, le praséodyme, le néodyme, le bismuth, le cérium, et leurs mélanges ;
   - De préférence, A est choisi dans le groupe G_{A}(3) formé par le lanthane ;
   - L'élément B au site B de la structure pérovskite est choisi dans le groupe G_{B}(1) formé par les mélanges de cobalt et de fer, les mélanges de cobalt et de manganèse, les mélanges de cobalt et de chrome, les mélanges de cobalt et de nickel, les mélanges de chrome et de manganèse, les mélanges de chrome et de nickel, les mélanges de chrome et de fer, les mélanges de manganèse et de fer, les mélanges de manganèse et de nickel, les mélanges de nickel et de fer, les mélanges de cobalt et de titane, les mélanges de cobalt et de cuivre, le cobalt, les mélanges de chrome et de titane, les mélanges de chrome et de cuivre, les mélanges de nickel et de titane, le chrome, le nickel, le cuivre, le fer, les mélanges de nickel et de cuivre, et leurs mélanges ;
- De préférence, l'élément B est choisi dans le groupe G_{B}(2) formé par les mélanges de cobalt et de fer, les mélanges de cobalt et de manganèse, les mélanges de chrome et de manganèse, les mélanges de chrome et de fer, les mélanges de cobalt et de chrome et de fer, les mélanges de cobalt et de chrome et de fer et de manganèse, les mélanges de cobalt et de fer et de manganèse, les mélanges de cobalt et de chrome, les mélanges de cobalt et de nickel, les mélanges de cobalt et de titane, les mélanges de cobalt et de cuivre, le cobalt, les mélanges de chrome et de nickel, les mélanges de chrome et de titane, les mélanges de chrome et de cuivre, les mélanges de chrome et de fer et de manganèse, les mélanges de nickel et de fer, les mélanges de nickel et de manganèse, les mélanges de nickel et de cobalt, les mélanges de nickel et de titane, les mélanges de nickel et de cobalt et de chrome, les mélanges de nickel et de cobalt et de chrome et de manganèse, les mélanges de nickel et de chrome et de manganèse, le chrome, le nickel, le cuivre ;
   et/ou
- de particules en un oxyde de structure spinelle CD₂O₄ ou D(C,D)O₄ pouvant comporter une, voire plusieurs, des caractéristiques optionnelles suivantes :
   - l'élément C de la structure spinelle est choisi dans le groupe Gc(1) formé par le nickel Ni dans une fraction molaire comprise entre 0 et 0,2 ou dans une fraction molaire égale à 1, le cuivre Cu dans une fraction molaire comprise entre 0 et 0,2, le fer Fe dans une fraction molaire comprise entre 0,2 et 0,6 ou dans une fraction molaire égale à 1, le zinc Zn dans une fraction molaire comprise entre 0 et 0,2 ou dans une fraction molaire égale à 1, le manganèse Mn dans une fraction molaire comprise entre 0 et 0,4, le cobalt Co dans une fraction molaire comprise entre 0 et 0,4 ou dans une fraction molaire comprise entre 0,4 et 1, l'étain Sn dans une fraction molaire comprise entre 0 et 0,2 ou dans une fraction molaire égale à 1, les mélanges de zinc et de fer, les mélanges de fer et de manganèse, les mélanges de zinc et de manganèse, les mélanges de cobalt et de zinc, et leurs mélanges ;
   - De préférence, l'élément C est choisi dans le groupe Gc(2) formé par le nickel Ni dans une fraction molaire comprise entre 0 et 0,2 ou dans une fraction molaire égale à 1, le fer Fe dans une fraction molaire comprise entre 0,2 et 0,6 ou dans une fraction molaire égale à 1, le zinc Zn dans une fraction molaire égale à 1, le manganèse Mn dans une fraction molaire comprise entre 0 et 0,4, le cobalt Co dans une fraction molaire comprise entre 0 et 0,4 ou dans une fraction molaire comprise entre 0,4 et 1, l'étain Sn dans une fraction molaire comprise entre 0 et 0,2 ou dans une fraction molaire égale à 1, les mélanges de zinc et de fer, les mélanges de fer et de manganèse, les mélanges de zinc et de manganèse, les mélanges de cobalt et de zinc, et leurs mélanges ;
   - L'élément D de la structure spinelle est choisi dans le groupe G_{D}(1) formé par le manganèse Mn dans une fraction molaire comprise entre 0 et 0,4, le fer Fe dans une fraction molaire comprise entre 0 et 0,6 ou dans une fraction molaire égale à 1 (c'est-à-dire que D est l'élément Fe), le chrome Cr dans une fraction molaire comprise entre 0,2 et 0,6 et dans une fraction molaire égale à 1, l'aluminium Al dans une fraction molaire comprise entre 0 et 1, le titane Ti dans une fraction molaire comprise entre 0 et 1, le cobalt dans une fraction molaire égale à 1 sauf si l'élément C est le cobalt, les mélanges de fer et de chrome, les mélanges de fer et de chrome et de manganèse, les mélanges de manganèse et de chrome, les mélanges d'aluminium et de chrome, et leurs mélanges ;
   - De préférence, l'élément D est choisi dans le groupe G_{D}(2) formé par le manganèse Mn dans une fraction molaire comprise entre 0 et 0,4, le fer Fe dans une fraction molaire comprise entre 0,2 et 0,6 et dans une fraction molaire égale à 1, le chrome Cr dans une fraction molaire comprise entre 0 et 0,6 et dans une fraction molaire égale à 1, l'aluminium Al dans une fraction molaire égale à 1, le titane Ti dans une fraction molaire égale à 1, le cobalt dans une fraction molaire égale à 1 sauf si l'élément C est le cobalt, les mélanges de fer et de chrome, les mélanges de fer et de chrome et de manganèse, les mélanges de manganèse et de chrome, les mélanges d'aluminium et de chrome, et leurs mélanges ;
   et/ou
- de particules en un oxyde de structure hématite E₂O₃, l'élément E étant choisi dans le groupe G_{E}(1) formé par les mélanges d'aluminium et de chrome, les mélanges d'aluminium et de manganèse, et leurs mélanges ;
   et/ou
- de particules en un oxyde de structure rutile FO₂, l'élément F étant choisi dans le groupe G_{F}(1) formé par les mélanges d'étain et de vanadium, les mélanges de titane et de chrome et de niobium, les mélanges de titane et de chrome et de tungstène, les mélanges de titane et de niobium et de manganèse, les mélanges d'étain et de chrome, et leurs mélanges ;
   et/ou
- de particules en un orthosilicate choisis dans le groupe des orthosilicates de zirconium et de praséodyme (Zr,Pr)SiO₄, des orthosilicates de zirconium et de vanadium (Zr,V)SiO₄, des orthosilicates de zirconium dans lesquels se trouve de l'oxyde de fer en inclusion, et leurs mélanges.

Les particules de la troisième fraction particulaire peuvent être fabriquées, de manière connue, par différents procédés, comme la fusion, la synthèse en phase solide, la pyrolyse de sels, la précipitation d'hydroxydes et leur calcination, ou la synthèse par voie sol-gel.

### Quatrième fraction particulaire

La quatrième fraction particulaire représente de préférence moins de 1,5 %, de préférence moins de 1 %, de préférence encore moins de 0,5 %, de préférence moins de 0,2 %, de préférence moins de 0,1 %, en pourcentage massique. De préférence, la quatrième fraction particulaire est constituée des impuretés.

Dans un mode de réalisation, les oxydes représentent plus de 98 %, plus de 99 %, voire sensiblement 100 % de la masse du mélange particulaire.

Le mélange particulaire peut avoir subi une étape supplémentaire, par exemple une étape d'atomisation avant de passer à l'étape b), notamment pour en améliorer l'homogénéité chimique.

Un mélange particulaire tel que décrit "prêt-à-l'emploi" peut être mis en oeuvre. En variante, toutes les matières premières particulaires d'oxydes peuvent être dosées au moment de la préparation de la charge de départ.

Outre le mélange particulaire, la charge de départ peut comporter, classiquement, un ou plusieurs défloculant(s) et/ou liant(s) et/ou lubrifiant(s), de préférence temporaires, utilisés classiquement dans les procédés de mise en forme pour la fabrication de préformes à fritter, par exemple une résine acrylique, du polyéthylène glycol (PEG), ou de l'alcool polyvinylique (APV).

Enfin, la charge de départ peut comporter, classiquement, un solvant, de préférence un solvant aqueux, par exemple de l'eau, dont la quantité est adaptée au procédé utilisé pour la mise en forme de la charge de départ.

De préférence, le mélange particulaire représente plus de 90%, de préférence plus de 95%, voire plus de 99% de la masse de la charge de départ, le complément à 100% étant constitué par les défloculant(s), liant(s), lubrifiant(s), le solvant et par les impuretés. Les impuretés représentent de préférence moins de 2% de la charge de départ.

**A l'étape b)**, la charge de départ est mise en forme, par exemple par pressage uniaxial afin de former des préformes aux dimensions désirées.

D'autres techniques telles que le coulage en barbotine, le coulage en bande, le pressage isostatique, le coulage d'un gel, le moulage par injection ou une combinaison de ces techniques peuvent être utilisées.

Avant l'étape c), la préforme peut optionnellement subir une étape de séchage et/ou une étape d'usinage et/ou une étape de déliantage et/ou une étape de pré-frittage. L'étape de pré-frittage permet avantageusement des usinages plus précis et également d'atteindre des densités importantes lorsque le frittage s'effectue par HIP.

**A l'étape c)**, la préforme est frittée, de préférence sous air, à pression atmosphérique ou sous pression (pressage à chaud (« Hot Pressing » en anglais) ou pressage isostatique à chaud (« Hot Isostatic Pressing » en anglais, ou HIP)) et à une température comprise entre 1200°C et 1600°C, de préférence entre 1400°C et 1500°C, excepté lorsque la deuxième fraction particulaire contient, voire est constituée de particules en un orthosilicate, notamment Mg₃Al₂(SiO₄)₃, Ca₃Al₂(SiO₄)₃, CaTiSiO₅, et/ou de particules en un sorosilicate, notamment Ca₂Al₃(SiO₄)(Si₂O₇)OOH, et/ou de particules en un inosilicate, notamment (Ca, Al, Mg)₇Si₈O₂₂(OH)₂, et/ou de particules en un tectosilicate, notamment les feldspaths, et/ou de particules en une argile, notamment une vermiculite, auquel cas la température est de préférence comprise entre 1250°C et 1350°C. Avantageusement, un frittage dans ce domaine de température favorise le développement de propriétés mécaniques élevées. Par exemple, le frittage peut être effectué à 1300°C pour les préformes incorporant des particules silicatées (issues de la deuxième fraction particulaire) ou à 1450°C pour les préformes incorporant des particules en un composé alumineux.

Le temps de maintien à cette température est de préférence compris entre 2 et 8 heures. La vitesse de montée est classiquement comprise entre 10 et 100°C/h. La vitesse de descente peut être libre. Si des défloculant(s) et/ou liant(s) et/ou lubrifiants sont utilisés, le cycle de frittage comprend de préférence un palier de 1 à 4 heures à une température comprise entre 400°C et 800°C afin de favoriser l'élimination desdits produits.

Si la deuxième fraction particulaire contient, voire est constituée de particules de phase(s) SiAlON, en particulier de particules en Si₃N₄, et/ou de particules en AlN, et/ou de particules en Si₂ON₂, et/ou de particules en un AlON, l'atmosphère de frittage est de préférence inerte, par exemple sous argon et/ou azote, ou faiblement réductrice, comme par exemple sous un mélange argon et/ou azote, et d'hydrogène, le mélange comportant de préférence moins de 10 vol% d'hydrogène.

Les paramètres du procédé de fabrication, en particulier la granulométrie des particules de la charge de départ, l'additif de frittage, la compression pour fabriquer la préforme et la température de frittage peuvent être adaptés, de manière connue, pour adapter la densité de la pièce frittée à l'application visée.

La pièce frittée obtenue en fin de l'étape c) peut être usinée et/ou subir un traitement de surface, comme par exemple un polissage **(étape d)**), et/ou un sablage, et/ou un traitement chimique (par exemple hydrophobique), et/ou un traitement redox, selon toute technique connue de l'homme du métier.

A **l'étape f)**, la pièce frittée est intégrée comme élément structural et/ou décoratif dans un dispositif tel que décrit de manière à en constituer un capot.

### Dispositif de communication

Le dispositif de communication comporte un émetteur et/ou un récepteur d'ondes hertziennes de fréquences comprises entre 800MHz à 3GHz et un capot.

L'émetteur est un système électronique adapté pour traiter un signal qu'il reçoit, par exemple un signal sonore tel qu'une voix, et émettre en conséquence des ondes hertziennes de fréquences comprises entre 800MHz à 3GHz.

Le récepteur est un système électronique adapté pour recevoir des ondes hertziennes de fréquences comprises entre 800MHz à 3GHz, puis les traiter, par exemple pour les transformer en un signal, par exemple sonore.

Par exemple, dans le cas d'un téléphone, les ondes reçues sont traitées par le récepteur pour être transformées en un signal sonore que l'utilisateur peut entendre et la voix de l'utilisateur est traitée par l'émetteur pour être transformée en ondes, ces ondes étant émises à destination du réseau de télécommunication.

L'émetteur et/ou le récepteur peuvent être configurés pour émettre et/ou recevoir, respectivement, des ondes ultra-courtes (FM), des ondes radiofréquences (RF), des ondes conformes au standard Bluetooth™, au standard « Global System for Mobile Communications » (GSM), au standard « Digital Communication System » (DCS) et/ou au standard « Personal Communications Service » (PCS).

L'émetteur et/ou le récepteur peuvent être configurés pour émettre et/ou recevoir, respectivement, des ondes de fréquence supérieure à 30 MHz, voire supérieure à 300 MHz et/ou inférieures à 20 GHz, voire inférieure à 3 GHz.

Le dispositif de communication n'est pas limité et peut notamment être un téléphone, un appareil photo, une caméra, un ordinateur, une tablette numérique, un boitier numérique pour téléviseur ou pour ordinateur, un modem, un décodeur, un baladeur radio, un récepteur ou un émetteur WiFi. Le dispositif de communication peut être portable. Il peut présenter une masse inférieure à 1 kg, de préférence inférieure à 500 g.

Dans un mode de réalisation, le capot est totalement exposé à l'environnement extérieur. Il peut être apparent sans démontage, même partiel du dispositif.

Le capot peut être fixé, de manière amovible ou non sur un support du dispositif. Il peut en particulier être collé, clipsé, cousu, inséré en force ou cofritté avec son support.

Dans un mode de réalisation, le capot définit toute la surface extérieure du dispositif, c'est-à-dire la surface du dispositif exposée à l'environnement extérieur.

### Exemples

Les analyses chimiques ont été réalisées par fluorescence X en ce qui concerne les constituants dont la teneur est supérieure à 0,5 %. La teneur des constituants présents en une quantité inférieure à 0,5 % a été déterminée par AES-ICP (« Atomic Emission Spectoscopy-Inductively Coupled Plasma » en anglais).

L'aire spécifique a été mesurée par adsorption d'azote à 77 K et calculée par la méthode BET à 1 point, les échantillons étant prétraités à 300°C sous flux d'azote pendant 2 heures avant analyse.

Les distributions granulométriques ont été déterminées par sédigraphie, au moyen d'un sédigraphe Sedigraph 5100 de la société Micromeritics®, après avoir dispersé sous ultrasons une suspension des poudres à caractériser en présence de métaphosphate de sodium.

Les phases cristallines dans une poudre ou dans une pièce frittée ont été déterminées par diffraction X sur un appareil Brucker D5000 (avec un réglage pour 2θ de 5° à 80°, avec un pas de 0,02° et 1 seconde par pas). Préalablement à la mesure, la pièce frittée a été polie, la dernière étape de polissage ayant été réalisée avec une préparation diamantée Mecaprex LD32-E 1µm commercialisée par la société PRESI, puis traitée thermiquement à 1000°C pendant 1 heure et refroidie à température ambiante.

Une analyse EDS (« Energy Dispersive Spectroscopy » en anglais), une analyse par diffraction X, et/ou une cartographie élémentaire par microsonde peuvent également être réalisées pour identifier la nature des constituants de la pièce frittée issus de la troisième fraction particulaire. Alternativement, il est possible de faire subir au mélange particulaire tel que décrit, de préférence après mise en forme dudit mélange particulaire, un traitement thermique de façon à mettre en évidence une coloration après ledit traitement thermique, confirmant la présence d'un pigment.

La taille moyenne des grains d'une pièce frittée a été mesurée par une méthode de « Mean Linear Intercept », selon la norme ASTM E1382-97. Suivant cette norme, on trace des lignes d'analyse sur des images de ladite pièce frittée, puis, le long de chaque ligne d'analyse, on mesure les longueurs, dites « intercepts », entre deux joints de grains consécutifs coupant ladite ligne d'analyse. On détermine ensuite la longueur moyenne « l' » des intercepts « I ». Pour les tests ci-dessous, les intercepts ont été mesurés sur des images, obtenues par microscopie électronique à balayage, de sections de la pièce frittée, lesdites sections ayant préalablement été polies jusqu'à obtention d'une qualité miroir puis attaquées thermiquement pendant 30 min à une température inférieure de 100°C à la température de frittage, pour révéler les joints de grains. Le grossissement utilisé pour la prise des images a été choisi de façon à visualiser environ 500 grains sur une image. 5 images par pièce frittée ont été réalisées. Les résultats obtenus par cette norme ont été multipliés par un coefficient correcteur égal à 1,56 pour tenir compte de l'aspect tridimensionnel.

Les mesures de couleur ont été réalisées selon la norme NF ISO 7724 sur des pièces polies dont la dernière étape de polissage a été réalisée avec une préparation diamantée Mecaprex LD32-E 1µm commercialisée par la société PRESI, à l'aide d'un appareil CM-2500d, fabriqué par la société Konica Minolta, avec illuminant D65 (lumière naturelle), observateur à 10°, et réflexion spéculaire exclue.

La dureté et la ténacité des pièces frittées testées ont été mesurées par indentation Vickers sur des pièces frittées polies, la dernière étape de polissage ayant été réalisée avec une pâte diamantée de 1 µm.

La résistance en flexion a été mesurée à température ambiante par flexion 3 points sur des barrettes usinées et chanfreinées de dimensions 45 mm x 4 mm x 3 mm.

Les propriétés diélectriques des pièces frittées ont été mesurées sur des cylindres de diamètre 25 mm et d'épaisseur 2 mm. La résistivité volumique est mesurée selon la norme ASTM D257. Les pièces sont recouvertes par des feuillets d'aluminium de diamètre 12,7 mm est mis en pression à 0,05 MPa. Une tension de 500 V est appliquée sur l'échantillon, le courant passant est enregistré. La polarité de la tension est alternée toutes les 60 secondes pendant 6 minutes. La valeur de résistivité volumique est une moyenne des 6 mesures. La permittivité diélectrique εᵣ et le coefficient de pertes tan δ sont mesurés selon la norme ASTM D150. Les pièces sont recouvertes par des feuillets d'aluminium de diamètre 25 mm est mis en pression à 0,1 MPa. Une tension alternative de fréquence variable entre 1 Hz et 1 MHz est appliquée sur l'échantillon, le courant passant est enregistré.

Les exemples non limitatifs suivants sont donnés dans le but d'illustrer l'invention.

L'exemple 1, hors invention, est réalisé à partir d'un mélange particulaire consistant en une poudre d'alumine dont les principales caractéristiques figurent dans le tableau 1 suivant :

**Tableau 1**

| | Poudre d'alumine |
|---|---|
| Al₂O₃ (% massique) | Complément à 100% |
| SiO₂ (ppm) | 100 |
| Na₂O (ppm) | 140 |
| CaO (ppm) | 70 |
| Fe₂O₃ (ppm) | 80 |
| MgO (ppm) | <20 |
| TiO₂ (ppm) | <20 |
| Aire spécifique (m²/g) | 13 |
| D₁₀ (µm) | 0,2 |
| D₅₀ (µm) | 0,6 |
| D₉₀ (µm) | 1,5 |

2% de polyéthylène glycol PEG 4000 et 45% d'eau permutée sont ajoutés au mélange particulaire de manière à former une charge de départ. La charge de départ est dispersée dans un mélangeur pendant 30 minutes puis séchée par atomisation. La poudre ainsi obtenue est tamisée à travers un tamis de maille égale à 250 µm.

La charge de départ est mise en forme par pressage uniaxial à une pression de 100 MPa. Les préformes obtenues se présentent sous la forme de pastilles de 32 mm de diamètre et de 5 mm d'épaisseur.

Les préformes sont ensuite séchées à 110°C pendant 12 heures.

Les préformes sont frittées selon le cycle suivant :
- montée en température à 500°C à 100°C/h,
- maintien à 500°C pendant 2 heures,
- montée en température jusqu'à 1450°C, à 100°C/h,
- maintien à 1450°C pendant 2 heures,
- descente en température par refroidissement naturel.

Le tableau 3 résume les propriétés des pièces frittées obtenues.

L'exemple 2, hors invention, est réalisé à partir d'un mélange particulaire consistant en une poudre de zircone dont les principales caractéristiques figurent dans le tableau 2 suivant :

**Tableau 2**

| | Poudre de zircone yttriée |
|---|---|
| ZrO₂ (% massique) | Complément à 100% |
| Y₂O₃ (% massique) | 5,38 |
| Al₂O₃ (ppm) | 2500 |
| SiO₂ (ppm) | 100 |
| Na₂O (ppm) | 140 |
| CaO (ppm) | 70 |
| Fe₂O₃ (ppm) | 80 |
| MgO (ppm) | <20 |
| TiO₂ (ppm) | <20 |
| Aire spécifique (m²/g) | 13 |
| d₁₀ (µm) | 0,2 |
| d₅₀ (µm) | 0,6 |
| d₉₀ (µm) | 1,5 |

2% de polyéthylène glycol PEG 4000 et 45% d'eau permutée sont ajoutés au mélange particulaire de manière à former une charge de départ. La charge de départ est dispersée dans un mélangeur pendant 30 minutes puis séchée par atomisation. La poudre ainsi obtenue est tamisée à travers un tamis de maille égale à 250 µm.

La charge de départ est mise en forme par pressage uniaxial à une pression de 100 MPa. Les préformes obtenues se présentent sous la forme de pastilles de 32 mm de diamètre et de 5 mm d'épaisseur.

Les préformes sont ensuite séchées à 110°C pendant 12 heures.

Les préformes sont frittées selon le cycle suivant :
- montée en température à 500°C à 100°C/h,
- maintien à 500°C pendant 2 heures,
- montée en température jusqu'à 1450°C, à 100°C/h,
- maintien à 1450°C pendant 2 heures,
- descente en température par refroidissement naturel.

Le tableau 3 résume les propriétés des pièces frittées obtenues.

Les exemples 3 à 11 sont réalisés, à partir d'un mélange particulaire obtenu à partir de la poudre de zircone utilisée dans l'exemple 2 et :
- pour l'exemple 3, d'une poudre de spinelle MgAl₂O₄, commercialisée par la société Baikowski, présentant une pureté supérieure à 99,9% et une taille médiane égale à 0,3 µm ;
- pour l'exemple 4, d'une poudre de MgAl₁₂O₁₉, obtenue par traitement thermique de poudre de boehmite AlOOH et d'hydroxyde de magnésium à 1500°C pendant 5h. La poudre obtenue présente une pureté supérieure à 99% et une morphologie en plaquette de diamètre égale à 5 µm ;
- pour l'exemple 5, d'une poudre de cordiérite Al₃Mg₂AlSi₅O₁₈, obtenue par traitement thermique de poudre de boehmite AlOOH, d'hydroxyde de magnésium et de silice colloïdale Ludox à 1500°C pendant 5h. La poudre est ensuite broyée en voie humide afin d'obtenir une poudre de taille médiane égale à 0,3 µm ;
- pour l'exemple 6, d'une poudre de forstérite Mg₂SiO₄, présentant une pureté supérieure à 95 %. La poudre est broyée en voie humide afin d'obtenir une poudre de taille médiane égale à 0,3 µm ;.
- pour l'exemple 7, d'une poudre de zircon ZrSiO₄, commercialisée par la société Moulin des Prés sous la dénomination ZK4, présentant une pureté supérieure à 98 % et une taille médiane égale à 3 µm ;
- pour l'exemple 8, d'une poudre de mullite 3Al₂O₃-2SiO₂, obtenue par traitement thermique de poudre de boehmite AlOOH et de silice colloïdale Ludox à 1400°C pendant 5h. La poudre est ensuite broyée en voie humide afin d'obtenir une poudre de taille médiane égale à 0,3 µm ;
- pour l'exemple 9, d'une poudre d'épidote Ca₂Al₃(SiO₄)₃OH, présentant une pureté supérieure à 95 %. La poudre est calcinée à 800°C pendant 2h. La poudre est ensuite broyée en voie humide afin d'obtenir une poudre de taille médiane égale à 0,3 µm ;
- pour l'exemple 10, d'une poudre cordiérite identique à celle utilisée dans l'exemple 5 et comme troisième fraction particulaire une poudre de spinelle CoAl₂O₄, commercialisée par la société Ferro, présentant une pureté supérieure à 99 %, broyée en voie humide afin d'obtenir une taille médiane égale à 0,3 µm ;
- pour l'exemple 11, d'une poudre de forstérite identique à celle utilisée dans l'exemple 6 et comme troisième fraction particulaire une poudre d'hématite Fe₂O₃, commercialisée par la société BASF, présentant une pureté supérieure à 99 % et une taille médiane égale à 0,3 µm.

Les exemples 3, 7 et 8 sont hors invention.

Pour chacun des mélanges particulaires ainsi obtenus, 2% de polyéthylène glycol PEG 4000 et 45% d'eau permutée sont ajoutés de manière à former une charge de départ. La charge de départ est dispersée dans un mélangeur pendant 30 minutes puis séchée par atomisation. La poudre ainsi obtenue est tamisée à travers un tamis de maille égale à 250 µm.

La charge de départ est mise en forme par pressage uniaxial à une pression de 100 MPa. Les préformes obtenues se présentent sous la forme de pastilles de 32 mm de diamètre et de 5 mm d'épaisseur.

Les préformes sont ensuite séchées à 110°C pendant 12 heures.

Lesdites préformes ont ensuite été frittées selon le cycle suivant :
- montée en température à 500°C à 100°C/h,
- maintien à 500°C pendant 2 heures,
- montée en température jusqu'à une température T, à 100°C/h,
- maintien à la température T pendant 2 heures,
- descente en température par refroidissement naturel.

Les tableaux 3 et 4 résument les principales caractéristiques du procédé de fabrication et les propriétés des pièces frittées obtenues, respectivement.

**Tableau 3**

| Exemple | 1 | 2 | 3 | 4 | 5 | 6 | 7 | 8 | 9 | 10 | 11 |
|---|---|---|---|---|---|---|---|---|---|---|---|
| | Mélange particulaire | | | | | | | | | | |
| % poudre d'alumine | 100 | - | - | - | - | - | - | - | - | - | - |
| % poudre de zircone (première fraction particulaire) | - | 100 | 80 | 80 | 80 | 80 | 80 | 80 | 80 | 76 | 76 |
| Nature de la deuxième fraction particulaire | - | - | MgAlO₄ | MgAl₁₂O₁₉ | cordiérite | forstérite | zircon | mullite | épidote | cordiérite | forstérite |
| % de la deuxième fraction particulaire | - | - | 20 | 20 | 20 | 20 | 20 | 20 | 20 | 20 | 20 |
| taille médiane de la deuxième fraction particulaire (µm) | - | - | 0,2 | 5 | 0,3 | 0,3 | 3 | 0,3 | 0,3 | 0,3 | 0,3 |
| Nature de la troisième fraction particulaire | - | - | - | - | - | - | - | - | - | CoAl₂O₄ | Fe₂O₃ |
| % de la troisième fraction particulaire | - | - | - | - | - | - | - | - | - | 4 | 4 |
| taille médiane de la troisième fraction particulaire (µm) | - | - | - | - | - | - | - | - | - | 0,3 | 0,2 |

| Procédé | Procédé | | | | | | | | | | |
|---|---|---|---|---|---|---|---|---|---|---|---|
| Température de frittage T (°C) | 1450 | 1450 | 1450 | 1450 | 1450 | 1350 | 1450 | 1450 | 1350 | 1450 | 1350 |

**Tableau 4**

| | 1 | 2 | 3 | 4 | 5 | 6 | 7 | 8 | 9 | 10 | 11 |
|---|---|---|---|---|---|---|---|---|---|---|---|
| densité apparente (g/cm³) | 3,95 | 6,05 | 5,31 | 5,40 | 4,75 | 5,10 | 5,54 | 5,12 | 4,70 | 4,70 | 5,11 |
| %ZrO₂ (+ HfO₂) | < 0,01 | 94,2 | 75,4 | 75,4 | 75,4 | 75,4 | 88,8 | 75,4 | 75,4 | 72,3 | 72,3 |
| %Y₂O₃ | < 0,01 | 5,38 | 4,30 | 4,30 | 4,30 | 4,30 | 4,29 | 4,29 | 4,30 | 4,12 | 4,10 |
| %Al₂O₃ | > 99,9 | 0,25 | 14,1 | 19,0 | 7,2 | 0,20 | 0,21 | 14,6 | 7,1 | 8,9 | 0,19 |
| %MgO | < 0,002 | < 0,002 | 5,62 | 1,21 | 2,76 | 11,5 | 0,03 | 0,02 | 0,30 | 2,75 | 10,9 |
| %SiO₂ | 0,01 | 0,01 | 0,01 | 0,01 | 10,2 | 8,54 | 6,60 | 5,6 | 9,6 | 10,2 | 8,4 |
| %Autres | 0,05 | 0,05 | 0,05 | 0,05 | 0,10 | 0,10 | 0,20 | 0,10 | 3,2 | 1,73 | 4,1 |
| % de la première phase cristallisée sur la base de la partie cristallisée | - | 100 | 80 | 80 | 90 | 95 | 80 | 90 | 98 | 87 | 95 |
| % de la deuxième phase cristallisée, sur la base de la partie cristallisée | - | - | 20 | 20 | 10 | 5 | 20 | 10 | 2 | 10 | 5 |
| nature de la deuxième phase cristallisée | - | - | MgAl₂O₄ | MgAl₁₂O₁₉ | Mg₂Al₃(Si₅Al O₁₈) | Mg₂SiO₄ et MgSiO₃ | ZrSiO₄ | 3Al₂O₃.2SiO₂ et Al₂O₃ | CaAl₂Si₂O₈, | Mg₂Al₃(Si₅Al O₁₈) | Mg₂SiO₄ et MgSiO₃ et Fe₂O₃ |
| présence d'une première phase vitreuse amorphe | non | non | non | non | Oui | Oui | non | Oui | Oui | Oui | Oui |
| composition de la première phase vitreuse amorphe | - | - | - | - | 50% SiO₂, 35% Al₂O₃, 15% MgO | 47% SiO₂, 52,4% MgO, 0,1% Al₂O₃, 0,5% Y₂O₃ | - | 30% SiO₂, 69,5% Al₂O₃, 0,5% Y₂O₃ | 50% SiO₂, 30% Al₂O₃ 20% CaO | 49,5% SiO₂, 35% Al₂O₃, 15% MgO, 0,5%CoO | 46,5% SiO₂, 51,4% MgO, 2% Fe₂O₃, 0,1% Al₂O₃ |
| Module de rupture (MPa) | 350 | 1200 | 800 | 1000 | 1000 | 900 | 900 | 1000 | 700 | 1000 | 800 |
| Dureté Vickers (Hv) | 2100 | 1350 | 1400 | 1100 | 1100 | 1000 | 1100 | 1000 | 900 | 1100 | 900 |
| Ténacité (MPa·m^{1/2}) | 4 | 9 | 6 | 8 | 7 | 6 | 7 | 7 | 6 | 7 | 6 |
| Résistivité volumique à 20°C (Q.cm) | 4,0.10¹⁴ | 3,0.10¹² | 4,3.10¹² | 3,4.10¹² | 7,5.10¹² | 9,8.10¹² | 8,1.10¹² | 5,9.10¹² | 6,6.10¹² | 2,3.10¹² | 1,2.10¹² |
| permittivité diélectrique relative, εr, à 1 MHz | 9,43 | 30 | 23,09 | 23,76 | 19,86 | 18,27 | 22,74 | 18,56 | 18,86 | 20,01 | 24,89 |
| Coefficient de pertes, tanδ, mesuré à 1 MHz | 0,038 | 0,046 | 0,047 | 0,054 | 0,049 | 0,047 | 0,050 | 0,048 | 0,046 | 0,048 | 0,053 |
| εr.tanδ, mesuré à 1 MHz | 0,36 | 1,38 | 1,09 | 1,28 | 0,97 | 0,86 | 1,14 | 0,89 | 0,87 | 0,96 | 1,28 |
| L*/a*/b* | - | - | - | - | - | - | - | - | - | 45/5/-40 | 35/20/40 |

Les inventeurs considèrent que le compromis recherché est le suivant :
- module de rupture supérieur à 350 MPa, de préférence supérieur à 500 MPa, de préférence supérieur à 700 MPa, et
- ténacité supérieure à 4 MPa·m^{1/2}, de préférence supérieure à 5 MPa·m^{1/2}, de préférence supérieure à 6 MPa·m^{1/2}, de préférence supérieure à 7 MPa·m^{1/2}, et
- un produit εᵣ.tanδ mesuré à 1 MHz inférieur à 1,35, de préférence inférieur à 1,30, de préférence inférieur à 1,2, de préférence inférieur à 1,1, de préférence inférieur à 1.

Les exemples 3 à 11 satisfont au compromis, les exemples 5, 6, 8 et 9 étant préférés entre tous.

Comme cela apparaît clairement à présent, un dispositif de communication tel que décrit comporte un capot présentant à la fois une haute transparence aux ondes hertziennes de fréquences comprises entre 800MHz à 3GHz et une résistance élevée aux chocs et aux rayures.

Bien entendu, la présente invention n'est pas limitée aux modes de réalisation décrits fournis à titre d'exemples illustratifs et non limitatifs.

## Revendications

1. Procédé comportant les étapes suivantes
a) préparation d'une charge de départ à partir d'un mélange particulaire,
b) mise en forme d'une préforme à partir de ladite charge de départ,
c) frittage de ladite préforme de manière à obtenir une pièce frittée,
le mélange particulaire comportant, en pourcentage massique et pour un total de 100%:
- entre 40% et 88% d'une première fraction particulaire constituée de particules de zircone ZrO₂ et contenant un composé apte à stabiliser la zircone, ledit composé apte à stabiliser la zircone stabilisant ou non ladite zircone et étant choisi parmi Y₂O₃, Sc₂O₃, MgO, CaO, CeO₂ et leurs mélanges, et présent en une quantité supérieure à 2,0% et inférieure à 20,0%, calculée en pourcentages en masse sur la base de la somme de ZrO₂, Y₂O₃, Sc₂O₃, MgO, CaO et CeO₂, la teneur MgO + CaO étant inférieure à 5,0% sur la base de la somme de ZrO₂, Y₂O₃, SC₂O₃, MgO, CaO et CeO₂, le composé apte à stabiliser la zircone pouvant être remplacé par une quantité équivalente de précurseur(s) de ce composé,
- entre 10% et 50% d'une deuxième fraction particulaire constituée de particules en un composé de formule XAlₘOₙ, avec X choisi parmi Mg, Ca, Sr, Y, les oxydes de lanthanides et leurs mélanges, m étant un nombre entier tel que 10 ≤ m ≤ 12, n étant un nombre entier tel que 16 ≤ n ≤ 20, et/ou de particules en un composé de formule XₓAlₐSi_{b}O_{c}(OH)_{y}(H₂O)_{z} avec X choisi parmi Mg, Ca, Sr, Sc, Y, les oxydes de lanthanides, Ti, Fe, Mn, Co, Cr et leurs mélanges, x, a, b, c, y, z étant des nombres entiers tels que x+a >0, c > 0, b > 0, a/b ≤ 2, x/b ≤ 1, y ≤ 3 (a+x), et z ≤ b, et/ou de particules de SiAlON ou constituée de particules en un orthosilicate étant des particules en forstérite Mg₂SiO₄ et/ou des particules en grenat Mg₃Al₂(SiO₄)₃ et/ou des particules en grossulaire Ca₃Al₂(SiO₄)₃ et/ou des particules en andalousite Al₂SiO₅ et/ou des particules en sphène CaTiSiO₅ et/ou des particules en un mélange de ces composés et/ou de particules en un sorosilicate et/ou de particules en un cyclosilicate et/ou de particules en un inosilicate et/ou de particules en un phyllosilicate et/ou de particules en un tectosilicate et/ou de particules en une argile et/ou de particules en un mélange de ces composés ;
- moins de 10% d'une troisième fraction particulaire constituée de particules en un oxyde de structure pérovskite, optionnellement remplacé, totalement ou en partie, par une quantité équivalente de précurseur(s) de cet oxyde, et/ou de particules en un oxyde de structure spinelle et/ou de particules en un oxyde de structure rutile FO₂, l'élément F étant choisi dans le groupe G_{F}(1) formé par les mélanges d'étain et de vanadium, les mélanges de titane et de chrome et de niobium, les mélanges de titane et de chrome et de tungstène, les mélanges de titane et de niobium et de manganèse, les mélanges d'étain et de chrome, et leurs mélanges, et/ou de particules en un oxyde de structure hématite E₂O₃, l'élément E étant choisi dans le groupe G_{E}(1) formé par les mélanges d'aluminium et de chrome, les mélanges d'aluminium et de manganèse, et leurs mélanges, et/ou de particules en un composé choisi dans le groupe des orthosilicates de zirconium et de praséodyme (Zr,Pr)SiO₄, des orthosilicates de zirconium et de vanadium (Zr,V)SiO₄, des orthosilicates de zirconium dans lesquels se trouve de l'oxyde de fer en inclusion et leurs mélanges, et/ou de particules en un mélange de ces composés, moins de 2% d'une quatrième fraction particulaire constituée d'autres particules,
une phase SiAION étant une phase respectant l'une des formules suivantes :
- SiₜAl_{w}OᵤNᵥ, dans laquelle :
- t est supérieur ou égal à 0 et inférieur ou égal à 1,
- w est supérieur ou égal à 0 et inférieur ou égal à 1,
- u est supérieur ou égal à 0 et inférieur ou égal à 1,
- v est supérieur à 0 et inférieur ou égal à 1,
- t+w > 0,
t, w, u et v étant des indices stoechiométriques et normalisés par rapport à celui qui est le plus élevé, rendu égal à 1 ;
- MeₛSi_{12-(q+r)}Al_{(q+r)}OᵣN₁₆₋ᵣ, avec 0 ≤ s ≤ 2, Me un cation choisi parmi les cations de lanthanides, Fe, Y, Ca, Li et leurs mélanges, 0 ≤ q ≤ 12, 0 ≤ r ≤ 12 et q+r ≤ 12.

2. Procédé selon la revendication précédente, dans lequel le mélange particulaire présente une aire spécifique, calculée par la méthode BET, supérieure à 3 m²/g et inférieure à 30 m²/g.

3. Procédé selon l'une quelconque des revendications précédentes, dans lequel la première fraction particulaire représente plus de 70% et/ou moins de 85% du mélange particulaire, en pourcentage massique et/ou la taille médiane des particules de la première fraction particulaire du mélange particulaire est comprise entre 100 nm et 1000 nm.

4. Procédé selon l'une quelconque des revendications précédentes, dans lequel la deuxième fraction particulaire représente plus de 15% et/ou moins de 40% du mélange particulaire, en pourcentage massique et/ou la taille médiane des particules de la deuxième fraction particulaire du mélange particulaire est comprise entre 100 nm et 10000 nm et/ou plus de 25% en masse des particules de la deuxième fraction particulaire présentent un rapport longueur / largeur supérieur à 3.

5. Procédé selon l'une quelconque des revendications précédentes, dans lequel la courbe de répartition granulométrique de la deuxième fraction particulaire est telle que le rapport (D₉₀-D₁₀)/D₅₀ soit inférieur à 5.

6. Procédé selon l'une quelconque des revendications précédentes, dans lequel la deuxième fraction particulaire est constituée de particules en un composé de formule XAlₘOₙ, avec X choisi parmi Mg, Ca, Sr, Y, les oxydes de lanthanides et leurs mélanges, m étant un nombre entier tel que 10 ≤ m ≤ 12, n étant un nombre entier tel que 16 ≤ n ≤ 20, et/ou de particules en un composé de formule XₓAlₐSi_{b}O_{c}(OH)_{y}(H₂O)_{z} avec X choisi parmi Mg, Ca, Sr, Sc, Y, les oxydes de lanthanides, Ti, Fe, Mn, Co, Cr et leurs mélanges, x, a, b, c, y, z étant des nombres entiers tels que x+a >0, c > 0, b > 0, a/b ≤ 2, x/b ≤ 1, y ≤ 3 (a+x), et z ≤ b et/ou de particules de Si₃N₄ et/ou de particules d'AIN et/ou de particules d'AION et/ou de particules de Si₂ON₂ et/ou de particules en un mélange de ces composés.

7. Procédé selon l'une quelconque des revendications précédentes, dans lequel, dans la deuxième fraction particulaire,
- les particules en un sorosilicate sont des particules en épidote Ca₂Al₃(SiO₄)(Si₂O₇)OOH et/ou des particules en un silicate d'yttrium, l'yttrium pouvant être partiellement substitué par Sc, et/ou des particules de mélilite X₂ZSi₂O₇ avec X choisi parmi Y, les oxydes de lanthanides et leurs mélanges et Z choisi parmi Mg, Al et leurs mélanges et/ou des particules en un mélange de ces composés, et/ou
- les particules en un cyclosilicate sont des particules en une cordiérite ; et/ou
- les particules en un inosilicate sont des particules en un pyroxène et/ou des particules en un amphibole de formules (Ca, Al, Mg)₇Si₈BO₂₂(OH)₂ et/ou des particules en un mélange de ces composés ; et/ou
- les particules en un phyllosilicate sont des particules de serpentine Mg₃Si₂O₅(OH)₄ et/ou des particules de talc Mg₃Si₄O₁₀(OH)₂ et/ou des particules de pyrophyllite Al₂Si₄O₁₀(OH)₂ et/ou des particules en un mélange de ces composés ; et/ou
- les particules en un tectosilicate sont des particules en un feldspath ; et/ou
- les particules en une argile sont des particules en une kaolinite et/ou des particules en une montmorillonite et/ou des particules en une vermicullite et/ou des particules en un mélange de ces composés.

8. Procédé selon l'une quelconque des revendications précédentes, dans lequel la deuxième fraction particulaire est constituée
- de particules de MgAl₁₂O₁₉;
- de particules de LaAl₁₁O₁₈ ;
- de particules de grenat Mg₃Al₂(SiO₄)₃,
- de particules d'épidote Ca₂Al₃(SiO₄)(Si₂O₇)OOH;
- de particules d'un silicate d'yttrium, l'yttrium pouvant être partiellement substitué par Sc ;
- de particules de mélilite X₂ZSi₂O₇ avec X choisi parmi Y, les oxydes de lanthanides et leurs mélanges et Z choisi parmi Mg, Al et leurs mélanges ;
- de particules de cordiérite Mg₂Al₃(Si₅AlO₁₈) ;
- de particules d'un amphibole de formule (Ca, Al, Mg)₇Si₈O₂₂(OH)₂ ;
- de particules de talc Mg₃S₁₄O₁₀(OH)₂ ;
- de particules d'un feldspath (Ca, Sr) Al₂Si₂O₈ ;
- de particules de kaolinite Si₂O₅Al₂(OH)₄ ;
- de particules de montmorillonite Si₄O₁₀(Al,Mg)₃(OH)₂
- de particules de vermicullite (Mg,Ca)(MgAl)₆,(Al,Si)₈O₂₂(OH)₄.8H₂O,
- ou d'un mélange de telles particules.

9. Procédé selon la revendication immédiatement précédente, dans lequel
- lesdites particules de MgAl₁₂O₁₉ sont sous la forme de particules présentant un rapport longueur / largeur supérieur à 3 ; et/ou
- lesdites particules de LaAl₁₁O₁₈ sont sous la forme de particules présentant un rapport longueur / largeur supérieur à 3.

10. Procédé selon l'une quelconque des revendications 1 à 3 et 5 à 9, dans lequel la deuxième fraction particulaire comporte moins de 25% en masse de particules présentant un rapport longueur / largeur supérieur à 3, plus de 25% en masse des particules de la première fraction particulaire présentant un rapport longueur / largeur supérieur à 7.

11. Procédé selon l'une quelconque des revendications précédentes, dans lequel la troisième fraction particulaire est constituée :
- de particules en un oxyde de structure pérovskite ABO₃, l'élément A étant choisi dans le groupe G_{A}(1) formé par le calcium Ca, le strontium Sr, le baryum Ba, le lanthane La, le praséodyme Pr, le néodyme Nd, le bismuth Bi, le cérium Ce, et leurs mélanges, l'élément B étant choisi dans le groupe G_{B}(1) formé par les mélanges de cobalt et de fer, les mélanges de cobalt et de manganèse, les mélanges de cobalt et de chrome, les mélanges de cobalt et de nickel, les mélanges de chrome et de manganèse, les mélanges de chrome et de nickel, les mélanges de chrome et de fer, les mélanges de manganèse et de fer, les mélanges de manganèse et de nickel, les mélanges de nickel et de fer, les mélanges de cobalt et de titane, les mélanges de cobalt et de cuivre, le cobalt, les mélanges de chrome et de titane, les mélanges de chrome et de cuivre, les mélanges de nickel et de titane, le chrome, le nickel, le cuivre, le fer, les mélanges de nickel et de cuivre, et leurs mélanges ; et/ou
- de particules en un oxyde de structure spinelle CD₂O₄ ou D(C,D)O₄, l'élément C de la structure spinelle étant choisi dans le groupe Gc(1) formé par le nickel Ni dans une fraction molaire comprise entre 0 et 0,2 ou dans une fraction molaire égale à 1, le cuivre Cu dans une fraction molaire comprise entre 0 et 0,2, le fer Fe dans une fraction molaire comprise entre 0,2 et 0,6 ou dans une fraction molaire égale à 1, le zinc Zn dans une fraction molaire comprise entre 0 et 0,2 ou dans une fraction molaire égale à 1, le manganèse Mn dans une fraction molaire comprise entre 0 et 0,4, le cobalt Co dans une fraction molaire comprise entre 0 et 0,4 ou dans une fraction molaire comprise entre 0,4 et 1, l'étain Sn dans une fraction molaire comprise entre 0 et 0,2 ou dans une fraction molaire égale à 1, les mélanges de zinc et de fer, les mélanges de fer et de manganèse, les mélanges de zinc et de manganèse, les mélanges de cobalt et de zinc, et leurs mélanges, l'élément D étant choisi dans le groupe G_{D}(1) formé par le manganèse Mn dans une fraction molaire comprise entre 0 et 0,4, le fer Fe dans une fraction molaire comprise entre 0 et 0,6 ou dans une fraction molaire égale à 1, le chrome Cr dans une fraction molaire comprise entre 0,2 et 0,6 et dans une fraction molaire égale à 1, l'aluminium Al dans une fraction molaire comprise entre 0 et 1, le titane Ti dans une fraction molaire comprise entre 0 et 1, le cobalt dans une fraction molaire égale à 1 sauf si l'élément C est le cobalt, les mélanges de fer et de chrome, les mélanges de fer et de chrome et de manganèse, les mélanges de manganèse et de chrome, les mélanges d'aluminium et de chrome, et leurs mélanges ; et/ou
- de particules en un oxyde de structure hématite E₂O₃, l'élément E étant choisi dans le groupe G_{E}(1) formé par les mélanges d'aluminium et de chrome, les mélanges d'aluminium et de manganèse, et leurs mélanges ; et/ou
- de particules en un oxyde de structure rutile FO₂, l'élément F étant choisi dans le groupe G_{F}(1) formé par les mélanges d'étain et de vanadium, les mélanges de titane et de chrome et de niobium, les mélanges de titane et de chrome et de tungstène, les mélanges de titane et de niobium et de manganèse, les mélanges d'étain et de chrome, et leurs mélanges ; et/ou
- de particules en un orthosilicate choisis dans le groupe des orthosilicates de zirconium et de praséodyme (Zr,Pr)SiO₄, des orthosilicates de zirconium et de vanadium (Zr,V)SiO₄, des orthosilicates de zirconium dans lesquels se trouve de l'oxyde de fer en inclusion, et leurs mélanges.

12. Procédé selon l'une quelconque des revendications précédentes, dans lequel la taille médiane des particules de la troisième fraction particulaire est inférieure à 1000 nm et/ou la quatrième fraction particulaire représente moins de 0,5% du mélange particulaire, en pourcentage massique.

13. Procédé selon l'une quelconque des revendications précédentes, dans lequel les oxydes représentent plus de 98 % de la masse du mélange particulaire.

14. Procédé selon l'une quelconque des revendications précédentes, dans lequel à l'étape c), la préforme est frittée à une température comprise entre 1200°C et 1500°C.

15. Procédé selon l'une quelconque des revendications précédentes, dans lequel la pièce frittée obtenue en fin de l'étape c) est usinée et/ou subit un polissage, de préférence jusqu'à ce que la rugosité Ra de surface soit inférieure à 0,05 µm, et/ou un sablage et/ou un traitement chimique et/ou un traitement redox.

16. Procédé selon l'une quelconque des revendications précédentes, comportant une étape de vérification de la couleur de la pièce frittée par mesure des paramètres L* et/ou a* et/ou b*.

## Patentansprüche

1. Verfahren, umfassend die folgenden Schritte:
a) Herstellen einer Ausgangscharge aus einer teilchenförmigen Mischung,
b) Formen einer Vorform aus der Ausgangscharge,
c) Sintern der Vorform, um einen gesinterten Gegenstand zu erhalten,
wobei die teilchenförmige Mischung, in Masseprozent und für insgesamt 100 %, umfasst:
- zwischen 40 % und 88 % einer ersten teilchenförmigen Fraktion, welche aus Teilchen von Zirkon ZrO₂ besteht und eine Verbindung enthält, die geeignet ist, den Zirkon zu stabilisieren, wobei die Verbindung, die geeignet ist, den Zirkon zu stabilisieren, den Zirkon stabilisiert oder nicht und ausgewählt wird aus Y₂O₃, SC₂O₃, MgO, CaO, CeO₂ und ihren Mischungen, und in einer Menge von mehr als 2,0 % und weniger als 20,0 % vorliegt, berechnet in Masseprozent auf der Basis der Summe von ZrO₂, Y₂O₃, Sc₂O₃, MgO, CaO und CeO₂, wobei der Gehalt von MgO + CaO kleiner ist als 5,0 %, auf der Basis der Summe von ZrO₂, Y₂O₃, Sc₂O₃, MgO, CaO und CeO₂, wobei die Verbindung, die geeignet ist, den Zirkon zu stabilisieren, durch eine äquivalente Menge an Vorläufer (n) dieser Verbindung ersetzt werden kann,
- zwischen 10 % und 50 % einer zweiten teilchenförmigen Fraktion, bestehend aus Teilchen einer Verbindung mit der Formel XAlₘOₙ, wobei X ausgewählt wird aus Mg, Ca, Sr, Y, Lanthanidoxiden und ihren Mischungen, m eine ganze Zahl ist, so dass 10 ≤ m ≤ 12, n eine ganze Zahl ist, so dass 16 ≤ n ≤ 20, und/oder aus Teilchen einer Verbindung mit der Formel XₓAlₐSi_{b}O_{c}(OH)_{y}(H₂O)_{z}, wobei X ausgewählt wird aus Mg, Ca, Sr, Sc, Y, Lanthanidoxiden, Ti, Fe, Mn, Co, Cr und ihren Mischungen, x, a, b, c, y, z ganze Zahlen sind, so dass x + a > 0, c > 0, b > 0, a/b ≤ 2, x/b ≤ 1, y ≤ 3 (a + x) und z ≤ b, und/oder aus Teilchen von SiAlON oder bestehend aus Teilchen eines Orthosilikats, die Teilchen von Forsterit Mg₂SiO₄ sind, und/oder Teilchen von Granat Mg₃Al₂(SiO₄)₃, und/oder Teilchen von Grossular Ca₃Al₂(SiO₄)₃, und/oder Teilchen von Andalusit Al₂SiO₅, und/oder Teilchen von Sphen CaTiSiO₅, und/oder Teilchen einer Mischung dieser Verbindungen, und/oder aus Teilchen eines Sorosilikats, und/oder aus Teilchen eines Cyclosilikats, und/oder aus Teilchen eines Inosilikats, und/oder aus Teilchen eines Phyllosilikats, und/oder aus Teilchen eines Tectosilikats, und/oder aus Teilchen eines Tons, und/oder aus Teilchen einer Mischung dieser Verbindungen;
- weniger als 10 % einer dritten teilchenförmigen Fraktion, bestehend aus Teilchen eines Oxids mit einer Perovskitstruktur, gegebenenfalls zur Gänze oder teilweise ersetzt durch eine äquivalente Menge an Vorläufer(n) dieses Oxids, und/oder aus Teilchen eines Oxids mit einer Spinellstruktur, und/oder aus Teilchen eines Oxids mit einer Rutilstruktur FO₂, wobei das Element F ausgewählt wird aus der Gruppe G_{F}(1), die gebildet wird aus Mischungen von Zinn und von Vanadium, Mischungen von Titan und von Chrom und von Niob, Mischungen von Titan und von Chrom und von Wolfram, Mischungen von Titan und von Niob und von Mangan, Mischungen von Zinn und von Chrom, und ihren Mischungen, und/oder aus Teilchen eines Oxids mit einer Hematitstruktur E₂O₃, wobei das Element E ausgewählt wird aus der Gruppe G_{E}(1), die gebildet wird aus Mischungen von Aluminium und von Chrom, Mischungen von Aluminium und von Mangan, und ihren Mischungen, und/oder aus Teilchen einer Verbindung, die ausgewählt wird aus der Gruppe von Orthosilikaten von Zirconium und Praseodym (Zr,Pr)SiO₄, Orthosilikaten von Zirconium und von Vanadium (Zr,V)SiO₄, Orthosilikaten von Zirconium, in denen sich Eisenoxid eingeschlossen befindet, und ihren Mischungen, und/oder aus Teilchen einer Mischung dieser Verbindungen,
- weniger als 2 % einer vierten teilchenförmigen Fraktion, die aus anderen Teilchen besteht,
wobei eine Phase SiAlON eine Phase mit einer der folgenden Formeln ist:
- SiₜAl_{w}OᵤNᵥ, wobei:
- t größer oder gleich 0 und kleiner oder gleich 1 ist,
- w größer oder gleich 0 und kleiner oder gleich 1 ist,
- u größer oder gleich 0 und kleiner oder gleich 1 ist,
- v größer als 0 und kleiner oder gleich 1 ist,
- t + w > 0,
t, w, u und v stöchiometrische und normalisierte Indices im Verhältnis zu jenem sind, das am höchsten ist, gleich 1;
- MeₛSi_{12-(q+r)}Al_{(q+r)}OᵣN₁₆₋ᵣ, wobei 0 ≤ s ≤ 2, Me ein Kation, ausgewählt aus Lanthanidkationen, Fe, Y, Ca, Li und ihren Mischungen, 0 ≤ q ≤ 12, 0 ≤ r ≤ 12 und q + r ≤ 12.

2. Verfahren nach dem vorhergehenden Anspruch,
wobei die teilchenförmige Mischung eine spezifische Oberfläche, berechnet durch das BET-Verfahren, größer als 3 m²/g und kleiner als 30 m²/g aufweist.

3. Verfahren nach einem der vorhergehenden Ansprüche,
wobei die erste teilchenförmige Fraktion mehr als 70 % und/oder weniger als 85 % der teilchenförmigen Mischung, in Masseprozent, darstellt, und/oder die mittlere Größe der Teilchen der ersten teilchenförmigen Fraktion der teilchenförmigen Mischung zwischen 100 nm und 1000 nm beträgt.

4. Verfahren nach einem der vorhergehenden Ansprüche,
wobei die zweite teilchenförmige Fraktion mehr als 15 % und/oder weniger als 40 % der teilchenförmigen Mischung, in Masseprozent, darstellt, und/oder die mittlere Größe der Teilchen der zweiten teilchenförmigen Fraktion der teilchenförmigen Mischung zwischen 100 nm und 10000 nm beträgt, und/oder mehr als 25 Masse-% der Teilchen der zweiten teilchenförmigen Fraktion ein Verhältnis von Länge/Breite von mehr als 3 aufweisen.

5. Verfahren nach einem der vorhergehenden Ansprüche,
wobei die Kurve der granulometrischen Verteilung der zweiten teilchenförmigen Fraktion derart ist, dass das Verhältnis (D₉₀-D₁₀)/D₅₀ kleiner ist als 5.

6. Verfahren nach einem der vorhergehenden Ansprüche,
wobei die zweite teilchenförmige Fraktion aus Teilchen einer Verbindung mit der Formel XAlₘOₙ besteht, wobei X ausgewählt wird aus Mg, Ca, Sr, Y, Lanthanidoxiden und ihren Mischungen, m eine ganze Zahl ist, so dass 10 ≤ m ≤ 12, n eine ganze Zahl ist, so dass 16 ≤ n ≤ 20, und/oder aus Teilchen einer Verbindung mit der Formel XₓAlₐSi_{b}O_{c}(OH)_{y}(H₂O)_{z}, wobei X ausgewählt wird aus Mg, Ca, Sr, Sc, Y, Lanthanidoxiden, Ti, Fe, Mn, Co, Cr und ihren Mischungen, x, a, b, c, y, z ganze Zahlen sind, so dass x + a > 0, c > 0, b > 0, a/b ≤ 2, x/b ≤ 1, y ≤ 3 (a + x) und z ≤ b, und/oder aus Teilchen von Si₃N₄, und/oder aus Teilchen von AlN, und/oder aus Teilchen von AlON, und/oder aus Teilchen von Si₂ON₂, und/oder aus Teilchen einer Mischung dieser Verbindungen.

7. Verfahren nach einem der vorhergehenden Ansprüche,
wobei, in der zweiten teilchenförmigen Fraktion,
- die Teilchen eines Sorosilikats Teilchen von Epidot Ca₂Al₃(SiO₄)(Si₂O₇)OOH und/oder Teilchen eines Yttriumsilikats sind, wobei Yttrium teilweise substituiert werden kann durch Sc, und/oder Teilchen von Melilith X₂ZSi₂O₇, wobei X ausgewählt wird aus Y, Lanthanidoxiden und ihren Mischungen, und Z ausgewählt wird aus Mg, Al und ihren Mischungen, und/oder Teilchen von einer Mischung dieser Verbindungen, und/oder
- die Teilchen eines Cyclosilikats Teilchen von Cordierit sind; und/oder
- die Teilchen eines Inosilikats Teilchen von Pyroxen sind, und/oder Teilchen von Amphibol mit den Formeln (Ca, Al, Mg)₇Si₈O₂₂(OH)₂, und/oder Teilchen einer Mischung dieser Verbindungen, und/oder
- die Teilchen eines Phyllosilikats Teilchen von Serpentin Mg₃Si₂O₅(OH)₄ sind, und/oder Teilchen von Talk Mg₃Si₄O₁₀(OH)₂, und/oder Teilchen von Pyrophyllit Al₂Si₄O₁₀(OH)₂, und/oder Teilchen einer Mischung dieser Verbindungen, und/oder
- die Teilchen eines Tectosilikats Teilchen von Feldspat sind; und/oder
- die Teilchen eines Tons Teilchen von Kaolinit sind, und/oder Teilchen von Montmorillonit, und/oder Teilchen von Vermiculit, und/oder Teilchen einer Mischung dieser Verbindungen.

8. Verfahren nach einem der vorhergehenden Ansprüche,
wobei die zweite teilchenförmige Fraktion besteht aus:
- Teilchen von MgAl₁₂O₁₉;
- Teilchen von LaAl₁₁O₁₈;
- Teilchen von Granat Mg₃Al₂(SiO₄)₃;
- Teilchen von Epidot Ca₂Al₃(SiO₄)(Si₂O₇)OOH;
- Teilchen eines Yttriumsilikats, wobei Yttrium teilweise durch Sc substituiert werden kann;
- Teilchen von Melilith X₂ZSi₂O₇, wobei X ausgewählt wird aus Y, Lanthanidoxiden und ihren Mischungen, und Z ausgewählt wird aus Mg, Al und ihren Mischungen;
- Teilchen von Cordierit Mg₂Al₃(Si₅AlO₁₈);
- Teilchen eines Amphibols mit der Formel (Ca, Al, Mg)₇Si₈O₂₂(OH)₂;
- Teilchen von Talk Mg₃Si₄O₁₀(OH)₂;
- Teilchen von Feldspat (Ca, Sr)Al₂Si₂O₈;
- Teilchen von Kaolinit Si₂O₅Al₂(OH)₄;
- Teilchen von Montmorillonit Si₄O₁₀(Al,Mg)₃(OH)₂;
- Teilchen von Vermiculit (Mg,Ca)(MgAl)₆(Al,Si)₈O₂₂(OH)₄.8H₂O;
- oder einer Mischung solcher Teilchen.

9. Verfahren nach dem unmittelbar vorhergehenden Anspruch, wobei
- die Teilchen von MgAl₁₂O₁₉ in der Form von Teilchen sind, die ein Verhältnis von Länge/Breite von mehr als 3 aufweisen; und/oder
- die Teilchen von LaAl₁₁O₁₈ in der Form von Teilchen sind, die ein Verhältnis von Länge/Breite von mehr als 3 aufweisen.

10. Verfahren nach einem der Ansprüche 1 bis 3 und 5 bis 9,
wobei die zweite teilchenförmige Fraktion weniger als 25 Masse-% von Teilchen umfasst, die ein Verhältnis von Länge/Breite von mehr als 3 aufweisen, wobei mehr als 25 Masse-% der Teilchen der ersten teilchenförmigen Fraktion ein Verhältnis von Länge/Breite von mehr als 7 aufweisen.

11. Verfahren nach einem der vorhergehenden Ansprüche,
wobei die dritte teilchenförmige Fraktion besteht aus:
- Teilchen eines Oxids mit einer Perovskitstruktur ABO₃, wobei das Element A ausgewählt wird aus der Gruppe G_{A}(1), die gebildet wird von Calcium Ca, Strontium Sr, Barium Ba, Lanthan La, Praseodym Pr, Neodym Nd, Bismut Bi, Cer Ce, und ihren Mischungen, wobei das Element B ausgewählt wird aus der Gruppe G_{B}(1), die gebildet wird von Mischungen von Kobalt und von Eisen, Mischungen von Kobalt und von Mangan, Mischungen von Kobalt und von Chrom, Mischungen von Kobalt und von Nickel, Mischungen von Chrom und von Mangan, Mischungen von Chrom und von Nickel, Mischungen von Chrom und von Eisen, Mischungen von Mangan und von Eisen, Mischungen von Mangan und von Nickel, Mischungen von Nickel und von Eisen, Mischungen von Kobalt und von Titan, Mischungen von Kobalt und von Kupfer, Kobalt, Mischungen von Chrom und von Titan, Mischungen von Chrom und von Kupfer, Mischungen von Nickel und von Titan, Chrom, Nickel, Kupfer, Eisen, Mischungen von Nickel und von Kupfer, und ihren Mischungen; und/oder
- Teilchen eines Oxids mit einer Spinellstruktur CD₂O₄ oder D(C,D)O₄, wobei das Element C mit der Spinellstruktur ausgewählt wird aus der Gruppe Gc(1), die gebildet wird von Nickel Ni in einer Molfraktion zwischen 0 und 0,2 oder in einer Molfraktion gleich 1, Kupfer Cu in einer Molfraktion zwischen 0 und 0,2, Eisen Fe in einer Molfraktion zwischen 0,2 und 0,6 oder in einer Molfraktion gleich 1, Zink Zn in einer Molfraktion zwischen 0 und 0,2 oder in einer Molfraktion gleich 1, Mangan Mn in einer Molfraktion zwischen 0 und 0,4, Kobalt Co in einer Molfraktion zwischen 0 und 0,4 oder in einer Molfraktion zwischen 0,4 und 1, Zinn Sn in einer Molfraktion zwischen 0 und 0,2 oder in einer Molfraktion gleich 1, Mischungen von Zink und von Eisen, Mischungen von Eisen und von Mangan, Mischungen von Zink und von Mangan, Mischungen von Kobalt und von Zink, und ihren Mischungen, wobei das Element D ausgewählt wird aus der Gruppe G_{D}(1), die gebildet wird von Mangan in einer Molfraktion zwischen 0 und 0,4, Eisen Fe in einer Molfraktion zwischen 0 und 0,6 oder in einer Molfraktion gleich 1, Chrom Cr in einer Molfraktion zwischen 0,2 und 0,6 und in einer Molfraktion gleich 1, Aluminium Al in einer Molfraktion zwischen 0 und 1, Titan Ti in einer Molfraktion zwischen 0 und 1, Kobalt in einer Molfraktion gleich 1, außer das Element C ist Kobalt, Mischungen von Eisen und von Chrom, Mischungen von Eisen und von Chrom und von Mangan, Mischungen von Mangan und von Chrom, Mischungen von Aluminium und von Chrom, und ihren Mischungen; und/oder
- Teilchen eines Oxids mit einer Hematitstruktur E₂O₃, wobei das Element E ausgewählt wird aus der Gruppe G_{E}(1), die gebildet wird von Mischungen von Aluminium und von Chrom, Mischungen von Aluminium und von Mangan, und ihren Mischungen; und/oder
- Teilchen eines Oxids mit einer Rutilstruktur FO₂, wobei das Element F ausgewählt wird aus der Gruppe G_{F}(1), die gebildet wird von Mischungen von Zinn und von Vanadium, Mischungen von Titan und von Chrom und von Niob, Mischungen von Titan und von Chrom und von Wolfram, Mischungen von Titan und von Niob und von Mangan, Mischungen von Zinn und von Chrom, und ihren Mischungen; und/oder
- Teilchen eines Orthosilikats, ausgewählt aus der Gruppe von Orthosilikaten von Zirconium und von Praseodym (Zr,Pr)SiO₄, von Orthosilikaten von Zirconium und von Vanadium (Zr,V)SiO₄, von Orthosilikaten von Zirconium, in denen sich das Eisenoxid eingeschlossen befindet, und ihren Mischungen.

12. Verfahren nach einem der vorhergehenden Ansprüche,
wobei die mittlere Größe der Teilchen der dritten teilchenförmigen Fraktion kleiner ist als 1000 nm, und/oder die vierte teilchenförmige Fraktion weniger als 0,5 % der teilchenförmigen Mischung darstellt, in Masseprozent.

13. Verfahren nach einem der vorhergehenden Ansprüche,
wobei die Oxide mehr als 98 % der Masse der teilchenförmigen Mischung darstellen.

14. Verfahren nach einem der vorhergehenden Ansprüche,
wobei in dem Schritt c) die Vorform bei einer Temperatur zwischen 1200 °C und 1500 °C gesintert wird.

15. Verfahren nach einem der vorhergehenden Ansprüche,
wobei der gesinterte Gegenstand, der am Ende des Schritts c) erhalten wird, bearbeitet wird und/oder einem Polieren, vorzugsweise bis die Rauheit Ra der Oberfläche kleiner ist als 0,05 µm, und/oder einem Sandstrahlen und/oder einer chemischen Behandlung und/oder einer Redox-Behandlung unterzogen wird.

16. Verfahren nach einem der vorhergehenden Ansprüche,
umfassend einen Schritt der Verifikation der Farbe des gesinterten Gegenstands durch Messen der Parameter L* und/oder a* und/oder b*.

## Claims

1. Process comprising the following stages:
a) preparation of a starting charge from a particulate mixture,
b) shaping a preform from the said starting charge,
c) sintering the said preform so as to obtain a sintered part,
the particulate mixture comprising, as percentage by weight and for a total of 100%:
- between 40% and 88% of a first particulate fraction composed of zirconia ZrO₂ particles and containing a compound capable of stabilizing the zirconia, the said compound capable of stabilizing the zirconia stabilizing or not stabilizing the said zirconia and being chosen from Y₂O₃, SC₂O₃, MgO, CaO, CeO₂ and their mixtures, and present in an amount of greater than 2.0% and less than 20.0%, calculated as percentages by weight on the basis of the sum of ZrO₂, Y₂O₃, SC₂O₃, MgO, CaO and CeO₂, the MgO + CaO content being less than 5.0% on the basis of the sum of ZrO₂, Y₂O₃, SC₂O₃, MgO, CaO and CeO₂, it being possible for the compound capable of stabilizing the zirconia to be replaced with an equivalent amount of precursor(s) of this compound,
- between 10% and 50% of a second particulate fraction composed of particles made of a compound of formula XAlₘOₙ, with X chosen from Mg, Ca, Sr, Y, oxides of lanthanides and their mixtures, m being an integer such that 10 ≤ m ≤ 12, n being an integer such that 16 ≤ n ≤ 20, and/or of particles made of a compound of formula XₓAlₐSi_{b}O_{c}(OH)_{y}(H₂O)_{z}, with X chosen from Mg, Ca, Sr, Sc, Y, oxides of lanthanides, Ti, Fe, Mn, Co, Cr and their mixtures, x, a, b, c, y and z being integers such that x + a > 0, c > 0, b > 0, a/b ≤ 2, x/b ≤ 1, y ≤ 3(a + x) and z ≤ b, and/or of particles of SiAlON or composed of particles made of an orthosilicate being particles made of forsterite Mg₂SiO₄ and/or particles made of garnet Mg₃Al₂(SiO₄)₃ and/or particles made of grossular Ca₃Al₂(SiO₄)₃ and/or particles made of andalusite Al₂SiO₅ and/or particles made of titanite CaTiSiO₅ and/or particles made of a mixture of these compounds and/or of particles made of a sorosilicate and/or of particles made of a cyclosilicate and/or of particles made of an inosilicate and/or of particles made of a phyllosilicate and/or of particles made of a tectosilicate and/or of particles made of a clay and/or of particles made of a mixture of these compounds;
- less than 10% of a third particulate fraction composed of particles made of an oxide of perovskite structure, optionally replaced, completely or partially, with an equivalent amount of precursor(s) of this oxide, and/or of particles made of an oxide of spinel structure and/or of particles made of an oxide of rutile FO₂ structure, the element F being chosen from the group G_{F}(1) formed by the mixtures of tin and vanadium, the mixtures of titanium and chromium and niobium, the mixtures of titanium and chromium and tungsten, the mixtures of titanium and niobium and manganese, the mixtures of tin and chromium, and their mixtures, and/or of particles made of an oxide of hematite E₂O₃ structure, the element E being chosen from the group G_{E}(1) formed by the mixtures of aluminium and chromium, the mixtures of aluminium and manganese, and their mixtures, and/or of particles made of a compound chosen from the group of the zirconium praseodymium orthosilicates (Zr,Pr)SiO₄, of the zirconium vanadium orthosilicates (Zr,V)SiO₄, of the zirconium orthosilicates in which iron oxide is found in inclusion and their mixtures, and/or of particles made of a mixture of these compounds,
- less than 2% of a fourth particulate fraction composed of other particles,
an SiAlON phase being a phase observing one of the following formulae:
- SiₜAl_{w}OᵤNᵥ, in which:
- t is greater than or equal to 0 and less than or equal to 1,
- w is greater than or equal to 0 and less than or equal to 1,
- u is greater than or equal to 0 and less than or equal to 1,
- v is greater than or equal to 0 and less than or equal to 1,
- t + w > 0,
t, w, u and v being stoichiometric indices which are standardized with respect to that which is the highest, rendered equal to 1;
- MeₛSi_{12-(q+r)}Al_{(q+r)}OᵣN₁₆₋ᵣ, with 0 ≤ s ≤ 2, Me a cation chosen from the cations of lanthanides, Fe, Y, Ca, Li and their mixtures, 0 ≤ q ≤ 12, 0 ≤ r ≤ 12 and q+r ≤ 12.

2. Process according to the preceding claim, in which the particulate mixture exhibits a specific area, calculated by the BET method, of greater than 3 m²/g and less than 30 m²/g.

3. Process according to either one of the preceding claims, in which the first particulate fraction represents more than 70% and/or less than 85% of the particulate mixture, as percentage by weight, and/or the median size of the particles of the first particulate fraction of the particulate mixture is between 100 nm and 1000 nm.

4. Process according to any one of the preceding claims, in which the second particulate fraction represents more than 15% and/or less than 40% of the particulate mixture, as percentage by weight, and/or the median size of the particles of the second particulate fraction of the particulate mixture is between 100 nm and 10000 nm and/or more than 25% by weight of the particles of the second particulate fraction exhibit a length/width ratio of greater than 3.

5. Process according to any one of the preceding claims, in which the particle size distribution curve of the second particulate fraction is such that the ratio (D₉₀-D₁₀)/D₅₀ is less than 5.

6. Process according to any one of the preceding claims, in which the second particulate fraction is composed of particles made of a compound of formula XAlₘOₙ, with X chosen from Mg, Ca, Sr, Y, oxides of lanthanides and their mixtures, m being an integer such that 10 ≤ m ≤ 12, n being an integer such that 16 ≤ n ≤ 20, and/or of particles made of a compound of formula XₓAlₐSi_{b}O_{c}(OH)_{y}(H₂O)_{z}, with X chosen from Mg, Ca, Sr, Sc, Y, oxides of lanthanides, Ti, Fe, Mn, Co, Cr and their mixtures, x, a, b, c, y and z being integers such that x + a > 0, c > 0, b > 0, a/b ≤ 2, x/b ≤ 1, y ≤ 3(a + x) and z ≤ b, and/or of particles of Si₃N₄ and/or of particles of AlN and/or of particles of AlON and/or of particles of Si₂ON₂ and/or of particles made of a mixture of these compounds.

7. Process according to any one of the preceding claims, in which, in the second particulate fraction,
- the particles made of a sorosilicate are particles made of epidote Ca₂Al₃(SiO₄)(Si₂O₇)OOH and/or particles made of an yttrium silicate, it being possible for the yttrium to be partially substituted by Sc, and/or particles of melilite X₂ZSi₂O₇, with X chosen from Y, oxides of lanthanides and their mixtures and Z chosen from Mg, Al and their mixtures, and/or particles made of a mixture of these compounds; and/or
- the particles made of a cyclosilicate are particles made of a cordierite; and/or
- the particles made of an inosilicate are particles made of a pyroxene and/or particles made of an amphibole of formula (Ca,Al,Mg)₇Si₈O₂₂(OH)₂ and/or particles made of a mixture of these compounds; and/or
- the particles made of a phyllosilicate are particles of serpentine Mg₃Si₂O₅(OH)₄ and/or particles of talc Mg₃Si₄O₁₀(OH)₂ and/or particles of pyrophyllite Al₂Si₄O₁₀(OH)₂ and/or particles made of a mixture of these compounds; and/or
- the particles made of a tectosilicate are particles made of a feldspar; and/or
- the particles made of a clay are particles made of a kaolinite and/or particles made of a montmorillonite and/or particles made of a vermiculite and/or particles made of a mixture of these compounds.

8. Process according to any one of the preceding claims, in which the second particulate fraction is composed:
- of particles of MgAl₁₂O₁₉;
- of particles of LaAl₁₁O₁₈;
- of particles of garnet Mg₃Al₂(SiO₄)₃;
- of particles of epidote Ca₂Al₃(SiO₄)(Si₂O₇)OOH;
- of particles of an yttrium silicate, it being possible for the yttrium to be partially substituted by Sc;
- of particles of melilite X₂ZSi₂O₇, with X chosen from Y, oxides of lanthanides and their mixtures and Z chosen from Mg, Al and their mixtures;
- of particles of cordierite Mg₂Al₃(Si₅AlO₁₈) ;
- of particles of an amphibole of formula (Ca,Al,Mg)₇Si₈O₂₂(OH)₂;
- of particles of talc Mg₃Si₄O₁₀(OH)₂;
- of particles of a feldspar (Ca,Sr)Al₂Si₂O₈;
- of particles of kaolinite Si₂O₅lAl₂(OH)₄;
- of particles of montmorillonite Si₄O₁₀(Al,Mg)₃(OH)₂;
- of particles of vermiculite (Mg,Ca)(MgAl)₆(Al,Si)₈O₂₂(OH)₄.8H₂O;
- or of a mixture of such particles.

9. Process according to the immediately preceding claim, in which:
- the said particles of MgAl₁₂O₁₉ are in the form of particles exhibiting a length/width ratio of greater than 3; and/or
- the said particles of LaAl₁₁O₁₈ are in the form of particles exhibiting a length/width ratio of greater than 3.

10. Process according to any one of Claims 1 to 3 and 5 to 9, in which the second particulate fraction comprises less than 25% by weight of particles exhibiting a length/width ratio of greater than 3, more than 25% by weight of the particles of the first particulate fraction exhibiting a length/width ratio of greater than 7.

11. Process according to any one of the preceding claims, in which the third particulate fraction is composed:
- of particles made of an oxide of perovskite ABO₃ structure, the element A being chosen from the group G_{A}(1) formed by calcium Ca, strontium Sr, barium Ba, lanthanum La, praseodymium Pr, neodymium Nd, bismuth Bi, cerium Ce and their mixtures, the element B being chosen from the group G_{B}(1) formed by the mixtures of cobalt and iron, the mixtures of cobalt and manganese, the mixtures of cobalt and chromium, the mixtures of cobalt and nickel, the mixtures of chromium and manganese, the mixtures of chromium and nickel, the mixtures of chromium and iron, the mixtures of manganese and iron, the mixtures of manganese and nickel, the mixtures of nickel and iron, the mixtures of cobalt and titanium, the mixtures of cobalt and copper, cobalt alone, the mixtures of chromium and titanium, the mixtures of chromium and copper, the mixtures of nickel and titanium, chromium alone, nickel alone, copper alone, iron alone, the mixtures of nickel and copper, and their mixtures; and/or
- of particles made of an oxide of spinel CD₂O₄ or D(C,D)O₄ structure, the element C of the spinel structure being chosen from the group G_{C}(1) formed by nickel Ni in a molar fraction of between 0 and 0.2 or in a molar fraction equal to 1, copper Cu in a molar fraction of between 0 and 0.2, iron Fe in a molar fraction of between 0.2 and 0.6 or in a molar fraction equal to 1, zinc Zn in a molar fraction of between 0 and 0.2 or in a molar fraction equal to 1, manganese Mn in a molar fraction of between 0 and 0.4, cobalt Co in a molar fraction of between 0 and 0.4 or in a molar fraction of between 0.4 and 1, tin Sn in a molar fraction of between 0 and 0.2 or in a molar fraction equal to 1, the mixtures of zinc and iron, the mixtures of iron and manganese, the mixtures of zinc and manganese, the mixtures of cobalt and zinc, and their mixtures, the element D being chosen from the group G_{D}(1) formed by manganese Mn in a molar fraction of between 0 and 0.4, iron Fe in a molar fraction of between 0 and 0.6 or in a molar fraction equal to 1, chromium Cr in a molar fraction of between 0.2 and 0.6 and in a molar fraction equal to 1, aluminium Al in a molar fraction of between 0 and 1, titanium Ti in a molar fraction of between 0 and 1, cobalt in a molar fraction equal to 1, except if the element C is cobalt, the mixtures of iron and chromium, the mixtures of iron and chromium and manganese, the mixtures of manganese and chromium, the mixtures of aluminium and chromium, and their mixtures; and/or
- of particles made of an oxide of hematite E₂O₃ structure, the element E being chosen from the group G_{E}(1) formed by the mixtures of aluminium and chromium, the mixtures of aluminium and manganese, and their mixtures; and/or
- of particles made of an oxide of rutile FO₂ structure, the element F being chosen from the group G_{F}(1) formed by the mixtures of tin and vanadium, the mixtures of titanium and chromium and niobium, the mixtures of titanium and chromium and tungsten, the mixtures of titanium and niobium and manganese, the mixtures of tin and chromium, and their mixtures; and/or
- of particles made of an orthosilicate chosen from the group of the zirconium praseodymium orthosilicates (Zr,Pr)SiO₄, of the zirconium vanadium orthosilicates (Zr,V)SiO₄, of the zirconium orthosilicates in which iron oxide is found in inclusion, and their mixtures.

12. Process according to any one of the preceding claims, in which the median size of the particles of the third particulate fraction is less than 1000 nm and/or the fourth particulate fraction represents less than 0.5% of the particulate mixture, as percentage by weight.

13. Process according to any one of the preceding claims, in which the oxides represent more than 98% of the weight of the particulate mixture.

14. Process according to any one of the preceding claims, in which, in stage c), the preform is sintered at a temperature of between 1200°C and 1500°C.

15. Process according to any one of the preceding claims, in which the sintered part obtained at the end of stage c) is machined and/or subjected to a polishing, preferably until the surface roughness Ra is less than 0.05 µm, and/or a sandblasting and/or a chemical treatment and/or a redox treatment.

16. Process according to any one of the preceding claims, comprising a stage of confirmation of the colour of the sintered part by measurement of the L* and/or a* and/or b* parameters.
